(19) Europäisches Patentamt
European Patent Office
Office européen des brevets

(11) EP 4 300 966 A1

(12) EUROPEAN PATENT APPLICATION
published in accordance with Art. 153(4) EPC

(43) Date of publication:
03.01.2024 Bulletin 2024/01

(51) International Patent Classification (IPC):
H04N 19/593 (2014.01)     H04N 19/122 (2014.01)
H04N 19/129 (2014.01)     H04N 19/132 (2014.01)
H04N 19/176 (2014.01)     H04N 19/11 (2014.01)
H04N 19/61 (2014.01)

(21) Application number: 22760001.2

(22) Date of filing: 21.02.2022

(52) Cooperative Patent Classification (CPC):
H04N 19/11; H04N 19/122; H04N 19/129;
H04N 19/132; H04N 19/176; H04N 19/593;
H04N 19/61

(86) International application number:
PCT/KR2022/002524

(87) International publication number:
WO 2022/182083 (01.09.2022 Gazette 2022/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.02.2021 US 202163153363 P

(71) Applicant: LG Electronics Inc.
Yeongdeungpo-gu
Seoul 07336 (KR)

(72) Inventors:
• KOO, Moonmo
Seoul 06772 (KR)
• LIM, Jaehyun
Seoul 06772 (KR)
• KIM, Seunghwan
Seoul 06772 (KR)
• ZHAO, Jie
Seoul 06772 (KR)

(74) Representative: Frenkel, Matthias Alexander
Wuesthoff & Wuesthoff
Patentanwälte PartG mbB
Schweigerstraße 2
81541 München (DE)

(54) **IMAGE CODING METHOD AND DEVICE THEREFOR**

(57) An image decoding method according to the present document comprises the steps of: deriving corrected transform coefficients on the basis of secondary inverse transformation with respect to transform coefficients; and deriving residual samples for a target block on the basis of primary inverse transformation with respect to the corrected transform coefficients, wherein, on the basis of which the size of the target block is MxN (M≥16, N≥16), L (48<L≤96) corrected transform coefficients may be arrayed in an output area on the upper-left end of the target block.

FIG. 17

```
Receive residual information about target block
from bitstream                                    — S1710

Derive transform coefficients for a target block
based on residual information                     — S1720

Derive modified transform coefficients
based on inverse secondary transform
for transform coefficients                        — S1730

Derive residual samples for the target block
based on the inverse primary transform
for the modified transform coefficients
based on that a size of the target block is
MxN (M≥16, N≥16), L (48 < L ≤ 96) modified
transform coefficients are arranged in an output area
at an upper left of the target block              — S1740

Generate a reconstructed picture
based on residual samples and prediction samples
for the target block                              — S1750
```

**Description**

**TECHNICAL FIELD**

This document relates to image coding technology, and more particularly, to an image coding method and apparatus based on intra prediction in an image coding system.

**BACKGROUND ART**

Nowadays, the demand for high-resolution and high-quality images/videos such as 4K, 8K or more ultra high definition (UHD) images/videos has been increasing in various fields. As the image/video data becomes higher resolution and higher quality, the transmitted information amount or bit amount increases as compared to the conventional image data. Therefore, when image data is transmitted using a medium such as a conventional wired/wireless broadband line or image/video data is stored using an existing storage medium, the transmission cost and the storage cost thereof are increased.

Further, nowadays, the interest and demand for immersive media such as virtual reality (VR), artificial reality (AR) content or hologram, or the like is increasing, and broadcasting for images/videos having image features different from those of real images, such as a game image is increasing.

Accordingly, there is a need for a highly efficient image/video compression technique for effectively compressing and transmitting or storing, and reproducing information of high resolution and high quality images/videos having various features as described above.

**DISCLOSURE**

**TECHNICAL CHALLENGE**

The technical problem of this document is to provide a method and apparatus for increasing image coding efficiency.

Another technical task of this document is to provide an image coding method and apparatus to which LFNST is applied under various conditions.

Another technical task of this document is to provide an image coding method and apparatus to which LFNST combined with primary transform is applied in various ways.

Another technical problem of this document is to provide an image coding method and apparatus to which LFNST is applied, which can improve coding performance and minimize complexity.

**TECHNICAL SOLUTION**

According to one embodiment of this document, an image decoding method performed by a decoding device is provided. The method may comprise deriving transform coefficients for the target block based on the residual information; deriving modified transform coefficients based on inverse secondary transform for the transform coefficients; deriving residual samples for the target block based on inverse primary transform for the modified transform coefficients; and generating a reconstructed picture based on the residual samples of the target block, wherein, based on that a size of the target block is MxN (M≥16, N≥16), L (48 < L ≤ 96) modified transform coefficients are arranged in an output area at an upper left of the target block.

The deriving the modified transform coefficients may comprise deriving an input array by sorting the transform coefficients according to a forward diagonal scanning order; deriving a larger number of modified transform coefficients than the transform coefficients through a matrix operation of the input array and a transform kernel; arranging the modified transform coefficients in the output area, wherein the modified transform coefficients are arranged in the output area based on an order of either row-first direction or column-first direction according to an intra prediction mode of the target block.

The output area may be composed of a plurality of 4x4 sub-blocks which can be arranged in a scanning order from the DC position of the target block.

The output area may be composed of a plurality of pxq sub-blocks which can be arranged in a predetermined order from the DC position of the target block.

The output area may be an mxn block (m ≤ M, n ≤ N) at a top left of the target block.

The output area may comprise a fan-shaped area composed of lines spaced apart from the DC position of the target block by a same distance.

The input array may include R transform coefficients, wherein R is a multiple of 16 smaller than L.

The input array may be sorted in units of 4x4 sub-blocks which can be arranged in the forward diagonal scanning order from the DC position of the target block and sorted according to the forward diagonal scanning order within the 4x4 sub-block.

The deriving the modified transform coefficients may comprise deriving the transform kernel to be applied to the secondary transform, wherein the transform kernel is derived based on a transform set derived based on an intra prediction mode applied to the target block, wherein the transform set exists in plural based on a mapping relationship with the intra prediction mode, and one transform set is composed of a plurality of transform kernels, wherein a size of the inverse secondary transform is set based on the size of the target block, wherein at least one of a number of transform sets, a number of transform kernels constituting the transform set and a dimension of a transform kernel is derived based on the size of the inverse secondary transform.

Based on that both a horizontal length and a vertical length of the target block are greater than or equal to 4, and a horizontal length or a vertical length is 4, the size of the inverse secondary transform may be set to a first value, wherein, based on that both a horizontal length and a vertical length of the target block are greater than or equal to 8, and a horizontal length or a vertical length is 8, the size of the inverse secondary transform is set to a second value, wherein, based on that both a horizontal length and a vertical length of the target block are greater than or equal to 16, the size of the inverse secondary transform is set to a third value.

Based on the size of the inverse secondary transform being the first value, the dimension of the transform kernel may be set to 16x16, wherein, based on the size of the inverse secondary transform being the second value, the dimension of the transformation kernel is set to 48xR or 64xS, where the R is any one of 16, 32, 48, the S is any one of 16, 32, 48, 64, wherein, based on the size of the inverse secondary transform being the third value, the dimension of the transformation kernel is set to any one of 96xR, 64xS or 48xT, where the R is any one of 16, 32, 48, 64, 80, 96, the S is any one of 16, 32, 48, 64, the T is any one of 16, 32, 48.

Any one of DST-7, DCT-8 or Karhunen Loeve Transform (KLT) may be applied to the inverse primary transform.

At least one of a number of transform sets, a number of transform kernels constituting the transform set and a dimension of a transform kernel may be derived based on the size of the inverse secondary transform and a transform kernel applied to the inverse primary transform.

The inverse primary transform may include a horizontal transform and a vertical transform, and wherein a transform skip is applied to the horizontal transform or the vertical transform.

The method may further comprise deriving prediction samples for the target block based on an inter prediction, LFNST may also be applied to a target block to which inter prediction is applied.

The method may further comprise receiving information for a transform index applied to the inverse secondary transform, wherein the transform index is received when a transform coefficient exists in a specific area of the target block, and wherein the specific area is set based on the size of the inverse secondary transform

Based on a tree type of the target block being a single tree, the inverse secondary transform may be performed on luma component and chroma component of the target block.

According to one embodiment of this document, a video encoding method performed by an encoding device is provided. The method may comprise deriving transform coefficients for the target block based on a primary transform for the residual samples; deriving modified transform coefficients based on a secondary transform of the transform coefficients; and encoding image information including residual information derived based on the modified transform coefficients to generate the bitstream, wherein, based on that a size of the target block is MxN (M≥16, N≥16), the secondary transform is performed on L (48<L≤96) transform coefficients arranged in an input area at an upper left of the target block.

According to another embodiment of this document, a digital storage medium storing image data including encoded image information and/or bitstream generated according to an image encoding method performed by an encoding device and a method for transmitting such image information and/or bitstream may be provided.

According to another embodiment of this document, a digital storage medium storing image data including encoded image information and/or a bitstream causing the decoding device to perform the image decoding method and a method for transmitting such image information and/or bitstream may be provided.

## ADVANTAGEOUS EFFECTS

According to the present disclosure, it is possible to increase overall image/video compression efficiency.

According to this document, an image coding method and apparatus to which LFNST is applied may be provided under various conditions.

According to this document, the LFNST combined with the first-order transform can be provided in various ways.

According to this document, an LFNST-applied video coding method and apparatus capable of improving coding performance and minimizing complexity can be provided.

The effects that can be obtained through specific examples of the present disclosure are not limited to the effects listed above. For example, there may be various technical effects that a person having ordinary skill in the related art can understand or derive from the present disclosure. Accordingly, specific effects of the present disclosure are not limited to those explicitly described in the present disclosure and may include various effects that can be understood or derived from the technical features of the present disclosure.

## BRIEF DESCRIPTION OF THE DRAWINGS

FIG. 1 schematically illustrates an example of a video/image coding system to which the present disclosure is applicable.

FIG. 2 is a diagram schematically illustrating a configuration of a video/image encoding apparatus to which the present disclosure is applicable.

FIG. 3 is a diagram schematically illustrating a configuration of a video/image decoding apparatus to which the present disclosure is applicable.

FIG. 4 exemplarily shows a structure diagram of a content streaming system to which this document is applied.

FIG. 5 illustratively shows intra-directional modes of 65 prediction directions.

FIG. 6 schematically illustrates a conversion technique according to an embodiment of this document.

FIG. 7 is a diagram for explaining RST according to an embodiment of the present document.

FIG. 8 is a diagram illustrating a forward LFNST input area according to an embodiment of the present document.

FIG. 9a and FIG. 9b are diagrams illustrating an input sequence of input data according to an embodiment of the present document.

FIG. 10a and FIG. 10b are diagrams illustrating an input sequence of input data according to another embodiment of the present document.

FIG. 11 is a diagram illustrating a non-square ROI according to an embodiment of the present document.

FIG. 12 is a diagram illustrating an irregularly shaped ROI according to another embodiment of the present document.

FIG. 13 is a diagram illustrating a 64-sample ROI having an irregular shape according to an embodiment of the present document.

FIG. 14 is a diagram illustrating a 96-sample ROI having an irregular shape according to an embodiment of the present document.

FIG. 15 is a diagram illustrating a super set ROI and a subset ROI according to an embodiment of the present document.

FIG. 16 is a diagram illustrating a scan order of transform coefficients according to an embodiment of the present document.

FIG. 17 is a flowchart illustrating an operation of a video decoding apparatus according to an embodiment of the present document.

FIG. 18 is a flowchart illustrating an operation of a video encoding apparatus according to an embodiment of the present document.

## MODE FOR INVENTION

While the present disclosure may be susceptible to various modifications and include various embodiments, specific embodiments thereof have been shown in the drawings by way of example and will now be described in detail. However, this is not intended to limit the present disclosure to the specific embodiments disclosed herein. The terminology used herein is for the purpose of describing specific embodiments only, and is not intended to limit technical idea of the present disclosure. The singular forms may include the plural forms unless the context clearly indicates otherwise. The terms such as "include" and "have" are intended to indicate that features, numbers, steps, operations, elements, components, or combinations thereof used in the following description exist, and thus should not be understood as that the possibility of existence or addition of one or more different features, numbers, steps, operations, elements, components, or combinations thereof is excluded in advance.

Meanwhile, each component on the drawings described herein is illustrated independently for convenience of description as to characteristic functions different from each other, and however, it is not meant that each component is realized by a separate hardware or software. For example, any two or more of these components may be combined to form a single component, and any single component may be divided into plural components. The embodiments in which components are combined and/or divided will belong to the scope of the patent right of the present disclosure as long as they do not depart from the essence of the present disclosure.

Hereinafter, preferred embodiments of the present disclosure will be explained in more detail while referring to the attached drawings. In addition, the same reference signs are used for the same components on the drawings, and repeated descriptions for the same components will be omitted.

This document relates to video/image coding. For example, the method/example disclosed in this document may relate to a VVC (Versatile Video Coding) standard (ITU-T Rec. H.266), a next-generation video/image coding standard after VVC, or other video coding related standards (e.g., HEVC (High Efficiency Video Coding) standard (ITU-T Rec. H.265), EVC (essential video coding) standard, AVS2 standard, etc.).

In this document, a variety of embodiments relating to video/image coding may be provided, and, unless specified to the contrary, the embodiments may be combined to each other and be performed. In this document, a video may mean a set of a series of images over time.

Technical features individually described in one figure in the present disclosure may be individually implemented or may be simultaneously implemented.

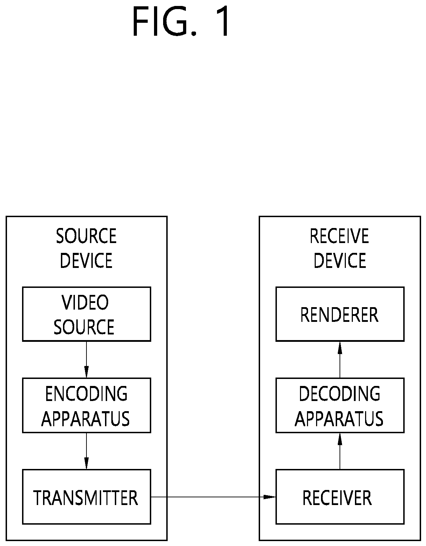

FIG. 1 schematically illustrates an example of a video/image coding system to which the present disclosure is applicable.

Referring to FIG. 1, the video/image coding system may include a first device (source device) and a second device (receive device). The source device may deliver encoded video/image information or data in the form of a file or streaming to the receive device via a digital storage medium or network.

The source device may include a video source, an encoding apparatus, and a transmitter. The receive device may include a receiver, a decoding apparatus, and a renderer. The encoding apparatus may be called a video/image encoding apparatus, and the decoding apparatus may be called a video/image decoding apparatus. The transmitter may be included in the encoding apparatus. The receiver may be included in the decoding apparatus. The renderer may include a display, and the display may be configured as a separate device or an external component.

The video source may obtain a video/image through a process of capturing, synthesizing, or generating a video/image. The video source may include a video/image capture device and/or a video/image generating device. The video/image capture device may include, for example, one or more cameras, video/image archives including previously captured video/images, or the like. The video/image generating device may include, for example, a computer, a tablet and a smartphone, and may (electronically) generate a video/image. For example, a virtual video/image may be generated through a computer or the like. In this case, the video/image capturing process may be replaced by a process of generating related data.

The encoding apparatus may encode an input video/image. The encoding apparatus may perform a series of procedures such as prediction, transform, and quantization for compression and coding efficiency. The encoded data (encoded video/image information) may be output in the form of a bitstream.

The transmitter may transmit the encoded video/image information or data output in the form of a bitstream to the receiver of the receive device through a digital storage medium or a network in the form of a file or streaming. The digital storage medium may include various storage mediums such as USB, SD, CD, DVD, Blu-ray, HDD, SSD, and the like. The transmitter may include an element for generating a media file through a predetermined file format, and may include an element for transmission through a broadcast/communication network. The receiver may receive/extract the bitstream and transmit the received/extracted bitstream to the decoding apparatus.

The decoding apparatus may decode a video/image by performing a series of procedures such as dequantization, inverse transform, prediction, and the like corresponding to the operation of the encoding apparatus.

The renderer may render the decoded video/image. The rendered video/image may be displayed through the display.

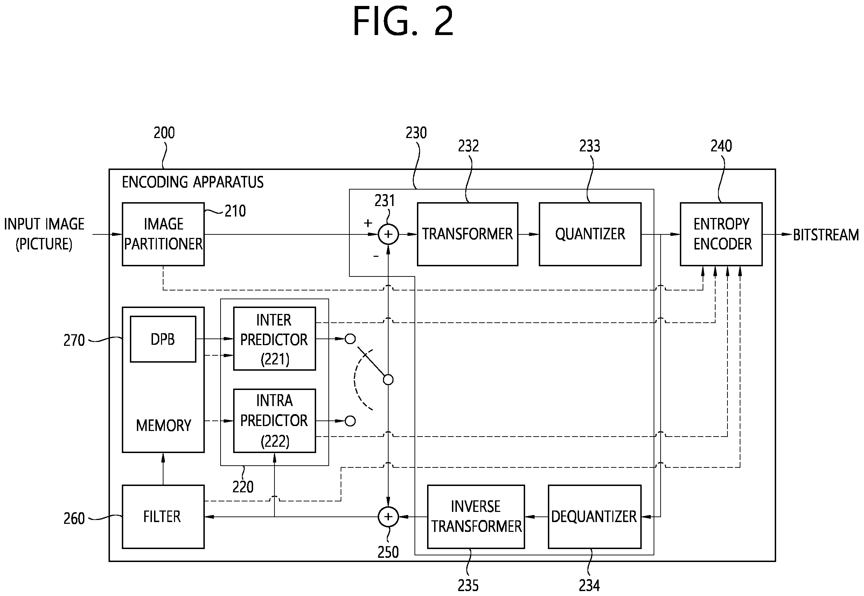

FIG. 2 is a diagram schematically illustrating a configuration of a video/image encoding apparatus to which the present disclosure is applicable. Hereinafter, what is referred to as the video encoding apparatus may include an image encoding apparatus.

Referring to FIG. 2, the encoding apparatus 200 may include an image partitioner 210, a predictor 220, a residual processor 230, an entropy encoder 240, an adder 250, a filter 260, and a memory 270. The predictor 220 may include an inter predictor 221 and an intra predictor 222. The residual processor 230 may include a transformer 232, a quantizer 233, a dequantizer 234, an inverse transformer 235. The residual processor 230 may further include a subtractor 231. The adder 250 may be called a reconstructor or reconstructed block generator. The image partitioner 210, the predictor 220, the residual processor 230, the entropy encoder 240, the adder 250, and the filter 260, which have been described above, may be constituted by one or more hardware components (e.g., encoder chipsets or processors) according to an embodiment. Further, the memory 270 may include a decoded picture buffer (DPB), and may be constituted by a digital storage medium. The hardware component may further include the memory 270 as an internal/external component.

The image partitioner 210 may partition an input image (or a picture or a frame) input to the encoding apparatus 200 into one or more processing units. As one example, the processing unit may be called a coding unit (CU). As another example, the processing unit may further include a prediction unit (PU) or a transform unit (TU). In this case, the prediction unit and the transform unit may be split or partitioned from the above-described final coding unit. The prediction unit may be a unit of sample prediction, and the transform unit may be a unit for deriving a transform coefficient and/or a unit for deriving a residual signal from a transform coefficient.

The unit and a term such as a block, an area, or the like may be used in place of each other according to circumstances. In a general case, an M × N block may represent a set of samples or transform coefficients consisting of M columns and N rows. The sample may generally represent a pixel or a value of a pixel.

The subtractor 231 subtracts a prediction signal (predicted block, prediction sample array) output from the predictor 220 from an input image signal (original block, original sample array) to generate a residual signal (residual block, residual sample array). The generated residual signal is transmitted to the transformer 232.

The prediction unit 220 may perform prediction on a block to be processed (hereinafter referred to as a current block) and generate a predicted block including predicted samples of the current block. The predictor 220 may determine whether intra prediction or inter prediction is applied in units of current blocks or CUs. The prediction unit may generate various types of information related to prediction, such as prediction mode information, and transmit them to the entropy encoding unit 240. Prediction-related information may be encoded in the entropy encoding unit 240 and output in the form of a bitstream.

The intra predictor 222 may predict the current block by referring to samples (reference samples) in the current picture. In intra prediction, prediction modes may include a plurality of non-directional modes and a plurality of directional modes. The intra predictor 222 may determine a prediction mode applied to the current block by using a prediction mode applied to neighboring blocks.

The inter predictor 221 may derive a predicted block for the current block based on a reference block (reference sample array) specified by a motion vector on a reference picture. At this time, in order to reduce the amount of motion information transmitted in the inter prediction mode, the motion information may be predicted on a block, subblock, or sample basis based on correlation of motion information between the neighboring block and the current block. The motion information may include a motion vector and a reference picture index.

The prediction signal generated through the inter predictor 221 and/or the intra predictor 222 may be used to generate a reconstructed signal or to generate a residual signal.

The transform unit 232 may generate transform coefficients by applying a transform technique to the residual signal. for example, the transformation technique may include Discrete Cosine Transform (DCT), Discrete Sine Transform (DST), Graph-Based Transform (GBT), Karhunen Loeve Transform (KLT), or Conditionally Non-linear Transform (CNT). The conversion unit 232 may perform a primary conversion and/or a secondary conversion.

The quantizer 233 may quantize the transform coefficients and transmit them to the entropy encoder 240, and the entropy encoder 240 may encode the quantized signal (information on the quantized transform coefficients) and output the encoded signal in a bitstream. The information on the quantized transform coefficients may be referred to as residual information. The quantizer 233 may rearrange block type quantized transform coefficients into a one-dimensional vector form based on a coefficient scan order, and generate information on the quantized transform coefficients based on the quantized transform coefficients of the one-dimensional vector form.

The entropy encoder 240 may perform various encoding methods such as, for example, exponential Golomb, context-adaptive variable length coding (CAVLC), context-adaptive binary arithmetic coding (CABAC), and the like. The entropy encoder 240 may encode information necessary for video/image reconstruction other than quantized transform coefficients (e.g. values of syntax elements, etc.) together or separately. A transmitter (not shown) which transmits a signal output from the entropy encoder 240 and/or a storage (not shown) which stores it may be configured as an internal/external element of the encoding apparatus 200, or the transmitter may be included in the entropy encoder 240.

Quantized transform coefficients output from the quantizer 233 may be used to generate a prediction signal. For example, by applying dequantization and inverse transform to quantized transform coefficients through the dequantizer 234 and the inverse transformer 235, the residual signal (residual block or residual samples) may be reconstructed.

The adder 155 adds the reconstructed residual signal to a prediction signal output from the inter predictor 221 or the intra predictor 222, so that a reconstructed signal (reconstructed picture, reconstructed block, reconstructed sample array) may be generated. When there is no residual for a processing target block as in a case where the skip mode is applied, the predicted block may be used as a reconstructed block. The adder 250 may be called a reconstructor or a reconstructed block generator. The generated reconstructed signal may be used for intra prediction of a next processing target block in the current block, and as described later, may be used for inter prediction of a next picture through filtering.

The filter 260 may improve subjective/objective video quality by applying the filtering to the reconstructed signal. For example, the filter 260 may generate a modified reconstructed picture by applying various filtering methods to the reconstructed picture, and may store the modified reconstructed picture in the memory 270, specifically in the DPB of the memory 270. The various filtering methods may include, for example, deblocking filtering, sample adaptive offset, an adaptive loop filter, a bilateral filter or the like.

The modified reconstructed picture which has been transmitted to the memory 270 may be used as a reference picture in the inter predictor 221. Through this, the encoding apparatus can avoid prediction mismatch in the encoding apparatus 100 and a decoding apparatus when the inter prediction is applied, and can also improve coding efficiency.

The memory 270 DPB may store the modified reconstructed picture in order to use it as a reference picture in the inter predictor 221. The memory 270 may store motion information of a block in the current picture, from which motion information has been derived (or encoded) and/or motion information of blocks in an already reconstructed picture. The memory 270 may store reconstructed samples of reconstructed blocks in the current picture, and transmit them to the intra predictor 222.

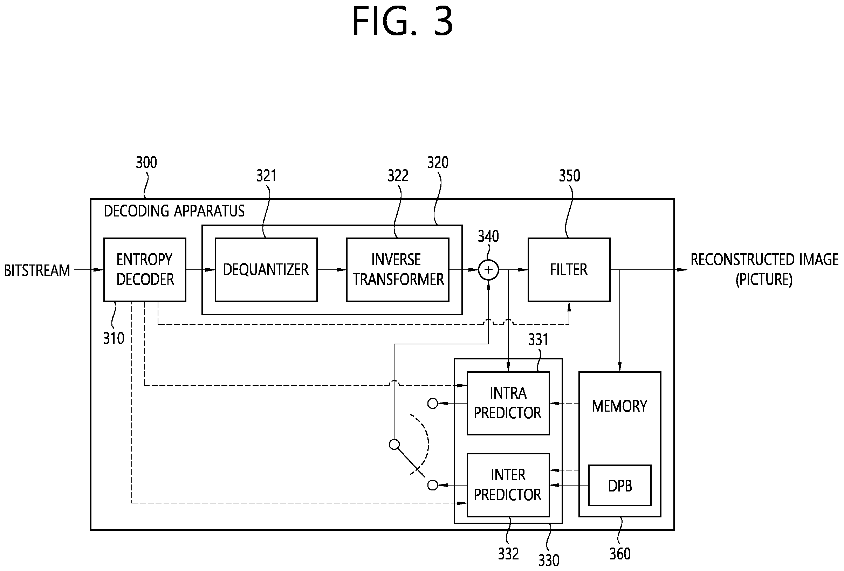

FIG. 3 is a diagram schematically illustrating a configuration of a video/image decoding apparatus to which the present disclosure is applicable.

Referring to FIG. 3, the video decoding apparatus 300 may include an entropy decoder 310, a residual processor 320, a predictor 330, an adder 340, a filter 350 and a memory 360. The predictor 330 may include an inter predictor 331 and an intra predictor 332. The residual processor 320 may include a dequantizer 321 and an inverse transformer 321. The entropy decoder 310, the residual processor 320, the predictor 330, the adder 340, and the filter 350, which have been described above, may be constituted by one or more hardware components (e.g., decoder chipsets or processors) according to an embodiment. Further, the memory 360 may include a decoded picture buffer (DPB), and may be constituted by a digital storage medium. The hardware component may further include the memory 360 as an internal/external component.

When a bitstream including video/image information is input, the decoding apparatus 300 may reconstruct an image correspondingly to a process by which video/image information has been processed in the encoding apparatus of FIG. 2. A processing unit of decoding may be, for example, a coding unit, a prediction unit or a transform unit. One or more transform units may be derived from a coding unit.

The decoding apparatus 300 may receive a signal output from the encoding apparatus of FIG. 2 in the form of a bitstream, and the received signal may be decoded through the entropy decoder 310. For example, the entropy decoder 310 may parse the bitstream to derive information (e.g., video/image information) required for image reconstruction (or picture reconstruction). In the present disclosure, signaled/received information and/or syntax elements, which will be described later, may be decoded through the decoding procedure and be obtained from the bitstream.

The dequantizer 321 may output transform coefficients by dequantizing the quantized transform coefficients. The dequantizer 321 may rearrange the quantized transform coefficients in the form of a two-dimensional block. In this case, the rearrangement may perform rearrangement based on an order of coefficient scanning which has been performed in the encoding apparatus. The dequantizer 321 may perform dequantization on the quantized transform coefficients using quantization parameter (e.g., quantization step size information), and obtain transform coefficients.

In the inverse transform unit 322, a residual signal (residual block, residual sample array) is obtained by inverse transforming the transform coefficients. The inverse transform unit 322 may perform inverse primary transform and/or inverse secondary transform.

The prediction unit 330 may perform prediction on a current block and generate a predicted block including predicted samples of the current block.

The intra predictor 331 may predict the current block by referring to the samples in the current picture. The referred samples may be located in the neighbor of or apart from the current block according to the prediction mode. In the intra prediction, prediction modes may include a plurality of non-directional modes and a plurality of directional modes. The intra predictor 331 may determine the prediction mode applied to the current block by using the prediction mode applied to the neighboring block.

The inter predictor 332 may derive a predicted block for the current block based on a reference block (reference sample array) specified by a motion vector on a reference picture. In the case of inter prediction, the neighboring block may include a spatial neighboring block existing in the current picture and a temporal neighboring block existing in the reference picture. For example, the inter predictor 332 may configure a motion information candidate list based on neighboring blocks, and derive a motion vector and/or a reference picture index of the current block based on received candidate selection information. Inter prediction may be performed based on various prediction modes, and the information on prediction may include information indicating a mode of inter prediction for the current block.

The adder 340 may generate a reconstructed signal (reconstructed picture, reconstructed block, reconstructed sample array) by adding the obtained residual signal to the prediction signal (predicted block, prediction sample array) output from the predictor 330. When there is no residual for a processing target block as in a case where the skip mode is applied, the predicted block may be used as a reconstructed block. The generated reconstructed signal may be used for intra prediction of a next processing target block in the current block, and as described later, may be output through filtering or be used for inter prediction of a next picture.

The filtering unit 350 may improve subjective/objective picture quality by applying filtering to the reconstructed signal. For example, the filtering unit 350 may generate a modified reconstructed picture by applying various filtering methods to the reconstructed picture. The various filtering methods may include, for example, deblocking filtering, sample adaptive offset, adaptive loop filter, bilateral filter, and the like.

The (modified) reconstructed picture which has been stored in the DPB of the memory 360 may be used as a reference picture in the inter predictor 332. The memory 360 may store motion information of a block in the current picture, from which motion information has been derived (or decoded) and/or motion information of blocks in an already reconstructed picture.

In this specification, the examples described in the predictor 330, the dequantizer 321, the inverse transformer 322, and the filter 350 of the decoding apparatus 300 may be similarly or correspondingly applied to the predictor 220, the dequantizer 234, the inverse transformer 235, and the filter 260 of the encoding apparatus 200, respectively.

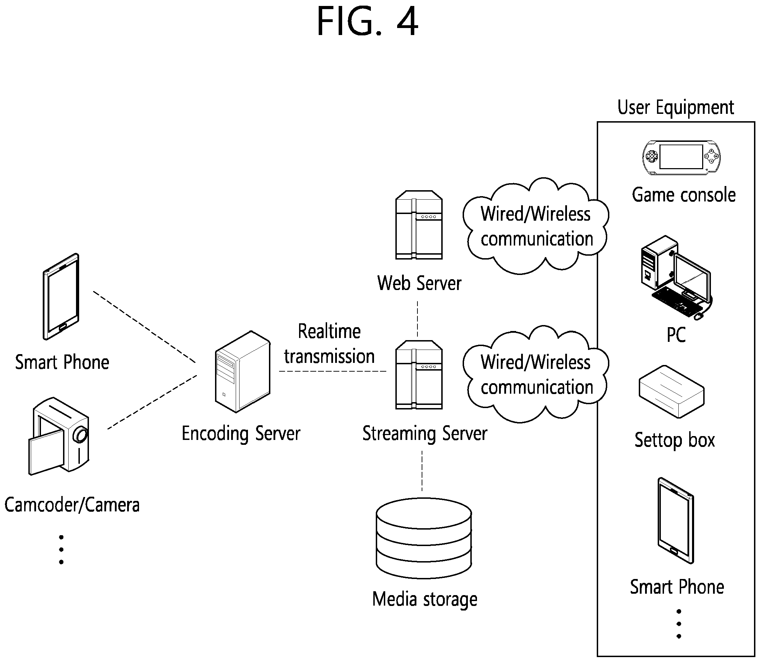

FIG. 4 exemplarily shows a structure diagram of a content streaming system to which this document is applied.

Further, the contents streaming system to which the present disclosure is applied may largely include an encoding server, a streaming server, a web server, a media storage, a user equipment, and a multimedia input device.

The encoding server functions to compress to digital data the contents input from the multimedia input devices, such as the smart phone, the camera, the camcoder and the like, to generate a bitstream, and to transmit it to the streaming server. As another example, in a case where the multimedia input device, such as, the smart phone, the camera, the camcoder or the like, directly generates a bitstream, the encoding server may be omitted. The bitstream may be generated by an encoding method or a bitstream generation method to which the present disclosure is applied. And the streaming server may store the bitstream temporarily during a process to transmit or receive the bitstream.

The streaming server transmits multimedia data to the user equipment on the basis of a user's request through the web server, which functions as an instrument that informs a user of what service there is. When the user requests a service which the user wants, the web server transfers the request to the streaming server, and the streaming server transmits multimedia data to the user. In this regard, the contents streaming system may include a separate control server, and in this case, the control server functions to control commands/responses between respective equipments in the content streaming system.

The streaming server may receive contents from the media storage and/or the encoding server. For example, in a case the contents are received from the encoding server, the contents may be received in real time. In this case, the streaming server may store the bitstream for a predetermined period of time to provide the streaming service smoothly.

For example, the user equipment may include a mobile phone, a smart phone, a laptop computer, a digital broadcasting terminal, a personal digital assistant (PDA), a portable multimedia player (PMP), a navigation, a slate PC, a tablet PC, an ultrabook, a wearable device (e.g., a watch-type terminal (smart watch), a glass-type terminal (smart glass), a head mounted display (HMD)), a digital TV, a desktop computer, a digital signage or the like. Each of servers in the contents streaming system may be operated as a distributed server, and in this case, data received by each server may be processed in distributed manner.

Meanwhile, the intra prediction mode may include non-directional (or non-angular) intra prediction modes and directional (or angular) intra prediction modes.

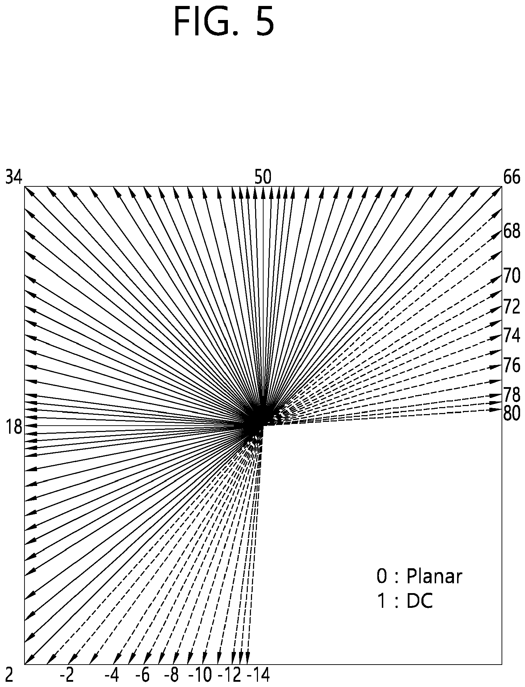

FIG. 5 shows an example of intra prediction modes to which embodiments of the present document are applicable.

Referring to FIG. 5, centering on the 34th intra prediction mode having an upward-left diagonal prediction direction, an intra-prediction mode with horizontal directionality and an intra-prediction mode with vertical directionality can be distinguished. As shown in FIG. 5, intra prediction modes 2 to 33 have a horizontal direction, and intra prediction modes 34 to 66 have a vertical direction. The 18th intra prediction mode and the 50th intra prediction mode represent a horizontal intra prediction mode and a vertical intra prediction mode, respectively, the second intra prediction mode may be referred to as a downward-left diagonal intra prediction mode, the 34th intra prediction mode may be referred to as an upward-left diagonal intra prediction mode, and the 66th intra prediction mode may be referred to as an upward-facing diagonal intra prediction mode. The non-directional prediction mode may include a planar intra prediction mode of number 0 and a DC intra prediction mode of number 1.

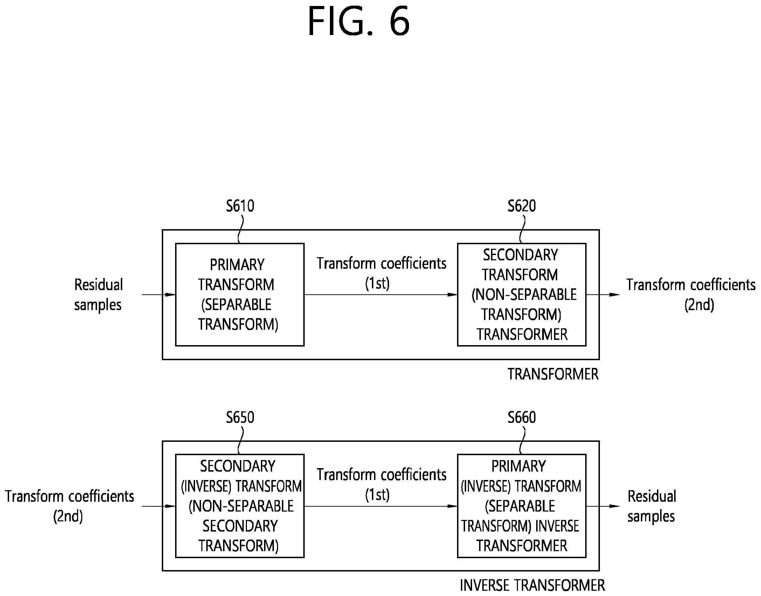

FIG. 6 schematically illustrates a conversion technique according to this document.

Referring to FIG. 6, a transformer may correspond to the transformer in the encoding apparatus of foregoing FIG. 2, and an inverse transformer may correspond to the inverse transformer in the encoding apparatus of foregoing FIG. 2, or to the inverse transformer in the decoding apparatus of FIG. 3.

The transformer may derive (primary) transform coefficients by performing a primary transform based on residual samples (residual sample array) in a residual block (S610). This primary transform may be referred to as a core transform. Herein, the primary transform may be based on multiple transform selection (MTS), and when a multiple transform is applied as the primary transform, it may be referred to as a multiple core transform.

The multiple core transform may represent a method of transforming additionally using discrete cosine transform (DCT) type 2 and discrete sine transform (DST) type 7, DCT type 8, and/or DST type 1. That is, the multiple core transform may represent a transform method of transforming a residual signal (or residual block) of a space domain into transform coefficients (or primary transform coefficients) of a frequency domain based on a plurality of transform kernels selected from among the DCT type 2, the DST type 7, the DCT type 8 and the DST type 1. Herein, the DCT type 2, the DST type 7, the DCT type 8, and the DST type 1 may be called a transform type, transform kernel or transform core. These DCT/DST transform types can be defined based on basis functions.

When the multiple core transform is performed, a vertical transform kernel and a horizontal transform kernel for a target block may be selected from among the transform kernels, a vertical transform may be performed on the target block based on the vertical transform kernel, and a horizontal transform may be performed on the target block based on the horizontal transform kernel. Here, the horizontal transform may indicate a transform on horizontal components of the target block, and the vertical transform may indicate a transform on vertical components of the target block.

According to an example, if the primary transform is performed by applying the MTS, a mapping relationship for transform kernels may be set by setting specific basis functions to predetermined values and combining basis functions to be applied in the vertical transform or the horizontal transform. For example, when the horizontal transform kernel is expressed as trTypeHor and the vertical direction transform kernel is expressed as trTypeVer, a trTypeHor or trTypeVer value of 0 may be set to DCT2, a trTypeHor or trTypeVer value of 1 may be set to DST7, and a trTypeHor or trTypeVer value of 2 may be set to DCT8.

In this case, MTS index information may be encoded and signaled to the decoding apparatus to indicate any one of a plurality of transform kernel sets. For example, an MTS index of 0 may indicate that both trTypeHor and trTypeVer values are 0, an MTS index of 1 may indicate that both trTypeHor and trTypeVer values are 1, an MTS index of 2 may indicate that the trTypeHor value is 2 and the trTypeVer value. Is 1, an MTS index of 3 may indicate that the trTypeHor value is 1 and the trTypeVer value is 2, and an MTS index of 4 may indicate that both both trTypeHor and trTypeVer values are 2.

In one example, transform kernel sets according to MTS index information are illustrated in the following table.

[Table 1]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

The transformer may derive modified (secondary) transform coefficients by performing the secondary transform based on the (primary) transform coefficients (S620). The primary transform is a transform from a spatial domain to a frequency domain, and the secondary transform refers to transforming into a more compressive expression by using a correlation existing between (primary) transform coefficients. The secondary transform may include a non-separable transform. In this case, the secondary transform may be called a non-separable secondary transform (NSST), or a mode-dependent non-separable secondary transform (MDNSST).

The non-separate secondary transform may refer to a transform that generates modified transform coefficients (or secondary transform coefficients) for a residual signal by secondary transforming the (first-order) transform coefficients derived through the primary transform based on a non-separable transform matrix. Here, based on the non-separate transformation matrix, it is possible to apply the transformation at once to the (primary) transformation coefficients without separately applying the vertical transformation and the horizontal transformation (or independently applying the horizontal and vertical transformation). For example, after rearranging 2-dimensional signals (conversion coefficients) into 1-dimensional signals through a specific predetermined direction (e.g., row-first direction or column-first direction), the non-separate secondary transform may derive modified transform coefficients (or secondary transform coefficients) based on a matrix operation of the one-dimensional vector and the non-separate transform matrix.

For example, the row priority order is to arrange the MxN block in the order of the 1st row, 2nd row, ..., Nth row, the column priority order is to arrange in a row in the order of the 1st column, 2nd column, ..., Mth column for MxN blocks. That is, for the non-separate secondary transform, the transform coefficient (derived through the primary transform) may be arranged into a 1D vector according to the row-major direction and then a matrix operation may be performed, or may be arranged into a 1-D vector according to the column-major direction and then a matrix operation is performed.

The non-separate secondary transform may be applied to a top-left region of a block composed of (primary) transform coefficients (hereinafter referred to as a transform coefficient block or a transform block). For example, when both the width (W) and height (H) of the transform coefficient block are 8 or more, an 8×8 non-separate secondary transform may be applied to an 8×8 region at the upper left of the transform coefficient block. In addition, when both the width (W) and height (H) of the transform coefficient block are 4 or more, and the width (W) or height (H) of the transform coefficient block is smaller than 8, a 4×4 non-separate secondary transform may be applied to the upper left min(8,W)×min(8,H) region of the transform coefficient block. However, the embodiment is not limited thereto, for example, even if only the condition that both the width (W) or height (H) of the transform coefficient block is 4 or more is satisfied, a 4×4 non-separate secondary transform may be applied to the upper left min(8,W)×min(8,H) region of the transform coefficient block. In summary, a non-separate secondary transform may be applied to an upper left 4×4 or 8×8 area of the transform block according to the size of the transform block. According to an example, a transformation for an upper left 4×4 area may be named a 4×4 transformation, and a transformation for an upper left 8×8 area may be referred to as an 8×8 transformation.

Here, to select a transform kernel, two non-separable secondary transform kernels per transform set for a non-separable secondary transform may be configured for both the 8 × 8 transform and the 4 × 4 transform, and there may be four transform sets. That is, four transform sets may be configured for the 8 × 8 transform, and four transform sets may be configured for the 4 × 4 transform. In this case, each of the four transform sets for the 8 × 8 transform may include two 8x8 transform kernels, and each of the four transform sets for the 4x4 transform may include two 4x4 transform kernels.

However, as the size of the transform, that is, the size of a region to which the transform is applied, may be, for example, a size other than 8 × 8 or 4 × 4, the number of sets may be n, and the number of transform kernels in each set may be k.

The transform set may be referred to as an NSST set or an LFNST set. A specific set among the transform sets may be selected, for example, based on the intra prediction mode of the current block (CU or subblock). A low-frequency non-separable transform (LFNST) may be an example of a reduced non-separable transform, which will be described later, and represents a non-separable transform for a low frequency component.

According to an example, the four transform sets according to the intra prediction mode may be mapped, for example, as shown in the following table.

[Table 2]

| predModeIntra | lfnstTrSetIdx |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 80 | 1 |

As shown in Table 2, any one of the four transform sets, that is, lfnstTrSetIdx, may be mapped to any one of four indexes, that is, 0 to 3, according to the intra prediction mode.

When it is determined that a specific set is used for the non-separable transform, one of k transform kernels in the specific set may be selected through a non-separable secondary transform index. An encoding apparatus may derive a non-separable secondary transform index indicating a specific transform kernel based on a rate-distortion (RD) check and may signal the non-separable secondary transform index to a decoding apparatus. The decoding apparatus may select one of the k transform kernels in the specific set based on the non-separable secondary transform index. For example, lfnst index value 0 may refer to a first non-separable secondary transform kernel, lfnst index value 1 may refer to a second non-separable secondary transform kernel, and lfnst index value 2 may refer to a third non-separable secondary transform kernel. Alternatively, lfnst index value 0 may indicate that the first non-separable secondary transform is not applied to the target block, and lfnst index values 1 to 3 may indicate the three transform kernels.

The transformer may perform the non-separable secondary transform based on the selected transform kernels, and may obtain modified (secondary) transform coefficients. As described above, the modified transform coefficients may be derived as transform coefficients quantized through the quantizer, and may be encoded and signaled to the decoding apparatus and transferred to the dequantizer/inverse transformer in the encoding apparatus.

Meanwhile, as described above, if the secondary transform is omitted, (primary) transform coefficients, which are an output of the primary (separable) transform, may be derived as transform coefficients quantized through the quantizer as described above, and may be encoded and signaled to the decoding apparatus and transferred to the dequantizer/inverse transformer in the encoding apparatus.

The inverse transformer may perform a series of procedures in the inverse order to that in which they have been performed in the above-described transformer. The inverse transformer may receive (dequantized) transformer coefficients, and derive (primary) transform coefficients by performing a secondary (inverse) transform (S630), and may obtain a residual block (residual samples) by performing a primary (inverse) transform on the (primary) transform coefficients (S640). In this connection, the primary transform coefficients may be called modified transform coefficients from the viewpoint of the inverse transformer. As described above, the encoding apparatus and the decoding apparatus may generate the reconstructed block based on the residual block and the predicted block, and may generate the reconstructed picture based on the reconstructed block.

The inverse transform unit may derive a modified transform coefficient by applying a transform kernel matrix to (inverse quantized) transform coefficients arranged according to a specific order, for example, a diagonal scan order (Specifically, the diagonal scan order starting from the upper left of the transform block and proceeding in the lower right direction). Modified transform coefficients may be two-dimensionally arranged in the upper left area of the transform block according to the direction in which transform coefficients are read for the secondary transform in the transform unit, that is, the row-first direction or the column-priority direction. When the 4×4 transform is performed by the transform unit, the inverse transform unit can arrange the modified transform coefficients in 2 dimensions in the 4×4 area of the transform block, when the 8×8 transform is performed by the transform unit, the inverse transform unit may align modified transform coefficients in 2 dimensions in the 8×8 region of the transform block.

Meanwhile, the secondary inverse transform may be NSST, reduced secondary transform (RST), or LFNST, and whether to apply the secondary inverse transform may be determined based on a secondary transform flag parsed from a bitstream. As another example, whether to apply the secondary inverse transform may be determined based on transform coefficients of the residual block.

This secondary inverse transform (that is, transform kernel, transform matrix, or transform kernel matrix) may be determined based on an LFNST (NSST or RST) transform set designated according to an intra prediction mode. Also, as an embodiment, the secondary transform determination method may be determined depending on the primary transform determination method. Depending on the intra prediction mode, various combinations of primary and secondary transforms may be determined. Also, for example, a region to which secondary inverse transform is applied may be determined based on the size of the current block.

On the other hand, as described above, when the secondary (inverse) transformation is omitted, residual blocks (residual samples) may be obtained by receiving (inverse quantized) transform coefficients and performing the first-order (separate) inverse transform. As described above, the encoding device and the decoding device may generate a reconstructed block based on the residual block and the predicted block and generate a reconstructed picture based on the residual block.

Meanwhile, in this document, a reduced secondary transform (RST) in which the size of a transform matrix (kernel) is reduced can be applied in the concept of NSST to reduce the amount of computation and memory required for non-separate secondary transform. In addition, since RST is mainly performed in a low-frequency region including non-zero coefficients in a transform block, it may be referred to as LFNST (Low-Frequency Non-Separable Transform). The conversion index may be named LFNST index.

In this specification, LFNST may mean a transform performed on residual samples of a target block based on a transform matrix having a reduced size. When the simplified transformation is performed, the amount of computation required for transformation may be reduced due to the reduction in the size of the transformation matrix. That is, LFNST can be used to solve the computational complexity issue that occurs when transforming a large block or non-separate transform.

On the other hand, when secondary inverse transform is based on LFNST, the inverse transformation unit 235 of the encoding device 200 and the inverse transformation unit 322 of the decoding device 300 may include an inverse RST unit for deriving modified transform coefficients based on the inverse RST of transform coefficients and an inverse primary transform unit for deriving residual samples for the target block based on inverse primary transform for modified transform coefficients. The inverse primary transform means an inverse transform of the primary transform applied to the residual. In this document, deriving a transform coefficient based on a transform may mean deriving a transform coefficient by applying a corresponding transform.

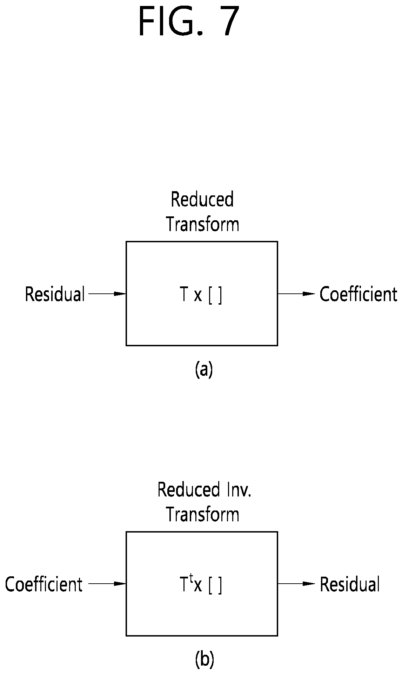

FIG. 7 is a diagram for explaining RST or LFNST to which RST is applied according to an embodiment of the present document.

In the present disclosure, a "target block" may refer to a current block to be coded, a residual block, or a transform block.

In the RST according to an example, an N-dimensional vector may be mapped to an R-dimensional vector located in another space, so that the reduced transform matrix may be determined, where R is less than N. N may mean the square of the length of a side of a block to which the transform is applied, or the total number of transform coefficients corresponding to a block to which the transform is applied, and the reduced factor may mean an R/N value. The reduced factor may be referred to as a reduced factor, reduction factor, simplified factor, simple factor or other various terms. Meanwhile, R may be referred to as a reduced coefficient, but according to circumstances, the reduced factor may mean R. Further, according to circumstances, the reduced factor may mean the N/R value.

The size of the reduced transform matrix according to an example may be RxN less than N × N, the size of a conventional transform matrix, and may be defined as in Equation 4 below.

[Equation 1]

$$T_{RxN} = \begin{bmatrix} t_{11} & t_{12} & t_{13} & \dots & t_{1N} \\ t_{21} & t_{22} & t_{23} & & t_{2N} \\ & \vdots & & \ddots & \vdots \\ t_{R1} & t_{R2} & t_{R3} & \cdots & t_{RN} \end{bmatrix}$$

The matrix T in the Reduced Transform block shown in FIG. 7(a) may mean the matrix TRxN of Equation 1. As shown in FIG. 7(a), when the reduced transform matrix TRxN is multiplied to residual samples for the target block, transform coefficients for the target block may be derived.

In an example, if the size of the block to which the transform is applied is 8x8 and R =16 (i.e., R/N = 16/64 = 1/4), then the RST according to FIG. 7(a) may be expressed as a matrix operation as shown in Equation 2 below. In this case, memory and multiplication calculation can be reduced to approximately 1/4 by the reduced factor.

In the present disclosure, a matrix operation may be understood as an operation of multiplying a column vector by a matrix, disposed on the left of the column vector, to obtain a column vector.

[Equation 2]

$$\begin{bmatrix} t_{1,1} & t_{1,2} & t_{1,3} & \dots & t_{1,64} \\ t_{2,1} & t_{2,2} & t_{2,3} & & t_{2,64} \\ & \vdots & & \ddots & \vdots \\ t_{16,1} & t_{16,2} & t_{16,3} & \cdots & t_{16,64} \end{bmatrix} \times \begin{bmatrix} r_1 \\ r_2 \\ \vdots \\ \vdots \\ \vdots \\ r_{64} \end{bmatrix}$$

In Equation 2, $r_1$ to $r_{64}$ may represent residual samples of the target block, and more specifically, may be transform coefficients generated by applying a primary transform. As a result of the operation of Equation 2, transform coefficients $c_i$ for the target block may be derived, and the process of deriving $c_i$ may be the same as Equation 3.

[Equation 3]

```
for i from 1 to R:

    c_i = 0

    for j from 1 to N:

        c_i += t_{i,j} * r_j
```

As a result of the calculation of Equation 3, transform coefficients c1 to cR for the target block may be derived. That is, when R=16, transform coefficients c1 to c16 for the target block may be derived. If, instead of RST, a regular transform is applied and a transform matrix of 64x64 (N × N) size is multiplied to residual samples of 64x1 (Nx1) size, then only 16 (R) transform coefficients are derived for the target block because RST was applied, although 64 (N) transform coefficients are derived for the target block. Since the total number of transform coefficients for the target block is reduced from N to R, the amount of data transmitted by the encoding apparatus 200 to the decoding apparatus 300 decreases, so efficiency of transmission between the encoding apparatus 200 and the decoding apparatus 300 can be improved.

When considered from the viewpoint of the size of the transform matrix, the size of the regular transform matrix is 64x64 (N × N), but the size of the reduced transform matrix is reduced to 16x64 (RxN), so memory usage in a case of performing the LFNST can be reduced by an R/N ratio when compared with a case of performing the regular transform. In addition, when compared to the number of multiplication calculations N × N in a case of using the regular transform matrix, the use of the reduced transform matrix can reduce the number of multiplication calculations by the R/N ratio (RxN).

In an example, the transformer 232 of the encoding apparatus 200 may derive transform coefficients for the target block by performing the primary transform and the RST-based secondary transform on residual samples for the target block. These transform coefficients may be transferred to the inverse transformer of the decoding apparatus 300, and the inverse transformer 322 of the decoding apparatus 300 may derive the modified transform coefficients based on the inverse reduced secondary transform (RST) for the transform coefficients, and may derive residual samples for the target block based on the inverse primary transform for the modified transform coefficients.

The size of the inverse RST matrix $T_{N \times R}$ according to an example is NxR less than the size N × N of the regular inverse transform matrix, and is in a transpose relationship with the reduced transform matrix $T_{R \times N}$ shown in Equation 1.

The matrix Tt in the Reduced Inv. Transform block shown in FIG. 7(b) may mean the inverse RST matrix $T_{RxN}{}^{T}$ (the superscript T means transpose). When the inverse RST matrix $T_{R \times N}{}^{T}$ is multiplied to the transform coefficients for the target block as shown in FIG. 6(b), the modified transform coefficients for the target block or the residual samples for the current block may be derived. The inverse RST matrix $T_{RxN}{}^{T}$ may be expressed as $(T_{R \times N})^{T}{}_{N \times R}$.

More specifically, when the inverse RST is applied as the secondary inverse transform, the modified transform coefficients for the target block may be derived when the inverse RST matrix $T_{R \times N}{}^{T}$ is multiplied to the transform coefficients for the target block.

Meanwhile, according to an example, inverse RST may be applied as an inverse primary transform. In this case, residual samples of the target block may be derived by multiplying the transform coefficients of the target block by the inverse RST matrix $T_{RxN}{}^{T}$.

In one embodiment, when the size of the block to which the inverse transform is applied is 8x8 and R = 16 (i.e., R / N = 16/64 = 1/4), the inverse RST according to (b) of FIG. 7 can be expressed as a matrix operation as shown in Equation 4 below.

[Equation 4]

$$
\begin{bmatrix}
t_{1,1} & t_{2,1} & & t_{16,1} \\
t_{1,2} & t_{2,2} & \cdots & t_{16,2} \\
t_{1,3} & t_{2,3} & & t_{16,3} \\
& \vdots & \ddots & \vdots \\
t_{1,64} & t_{2,64} & \cdots & t_{16,64}
\end{bmatrix}
\times
\begin{bmatrix}
c_1 \\
c_2 \\
\vdots \\
c_{16}
\end{bmatrix}
$$

In Equation 4, $c_1$ to $c_{16}$ may represent transform coefficients of the target block, that is, transform coefficients derived through residual coding. As a result of the operation of Equation 4, $r_i$ representing modified transform coefficients of the target block or residual samples of the target block may be derived, and the derivation process of $r_i$ may be the same as Equation 5.

[Equation 5]

For i from 1 to N

$r_i = 0$

for j from 1 to R

$r_i \mathrel{+}= t_{ji} * c_j$

As a result of the operation of Equation 5, $r_1$ to $r_N$ indicating modified transform coefficients of the target block or residual samples of the target block may be derived. Since N is 64 in Equation 4, 64 modified transform coefficients can be derived through Equation 5.

Considering the size of the inverse transformation matrix, the size of the normal inverse transform matrix is 64x64 (NxN), but the size of the simplified inverse transform matrix is reduced to 64x16 (NxR), compared to performing the normal inverse transform, the memory usage can be reduced by the R/N ratio when performing the inverse RST. In addition, compared to the number of multiplication operations NxN when using a normal inverse transformation matrix, using a simplified inverse transformation matrix, the number of multiplication operations can be reduced (NxR) by the R/N ratio. A simplified inverse transform matrix or inverse transform matrix may also be named a simplified transform matrix or a transform matrix if it is not confusing whether it is a transform or an inverse transform.

According to an embodiment of the present disclosure, for a transform in an encoding process, only 48 pieces of data may be selected and a maximum $16 \times 48$ transform kernel matrix may be applied thereto, rather than applying a $16 \times 64$ transform kernel matrix to 64 pieces of data forming an $8 \times 8$ region. Here, "maximum" means that m has a maximum value of 16 in an $m \times 48$ transform kernel matrix for generating m coefficients.

That is, when an RST is performed by applying an $m \times 48$ transform kernel matrix ($m \leq 16$) to an $8 \times 8$ region, 48 pieces of data are input and m coefficients are generated. When m is 16, 48 pieces of data are input and 16 coefficients are generated. That is, assuming that 48 pieces of data form a $48 \times 1$ vector, a $16 \times 48$ matrix and a $48 \times 1$ vector are sequentially multiplied, thereby generating a $16 \times 1$ vector. In this embodiment, the column vectors of Equation 2 are $r_1$ to $r_{48}$, the size of the transform matrix is 16x48, and 16 modified transform coefficients ($c_i$ to $c_{16}$) are derived through matrix operation.

Here, the 48 pieces of data forming the $8 \times 8$ region may be properly arranged, thereby forming the $48 \times 1$ vector. For example, a $48 \times 1$ vector may be constructed based on 48 pieces of data constituting a region excluding the bottom right 4x4 region among the $8 \times 8$ regions. Here, when a matrix operation is performed by applying a maximum $16 \times 48$ transform kernel matrix, 16 modified transform coefficients are generated, and the 16 modified transform coefficients may be arranged in a top-left $4 \times 4$ region according to a scanning order, and a top-right $4 \times 4$ region and a bottom-left 4x4 region may be filled with zeros.

In the inverse transformation of the decoding process, a transposed matrix of the transformation kernel matrix described above may be used. That is, when inverse RST or inverse LFNST is performed as an inverse transformation process performed by the decoding device, the input coefficient data to which inverse RST is applied is composed of a one-dimensional vector according to a predetermined arrangement order (diagonal scanning order), a modified coefficient vector obtained by multiplying a 1-dimensional vector by the corresponding inverse RST matrix from the left may be arranged in a 2-dimensional block according to a predetermined arrangement order.

If RST or LFNST is performed on the $8 \times 8$ area and inverse RST or inverse LFNST is performed for this, the size of the transformation matrix in Equation 4 is $48 \times 16$, the ten vectors are c1 to c16, through matrix operation, 48 modified transform coefficients ($r_1$ to $r_{48}$) are derived.

In summary, in the conversion process performed by the encoding device, when RST or LFNST is applied to an 8x8 area, a matrix operation is performed between 48 transform coefficients of the upper left, upper right, and lower left regions of the 8x8 region, excluding the lower right region of the 8x8 region, and a 16x48 transform kernel matrix. For matrix operation, 48 transform coefficients are input as a one-dimensional array. When this matrix operation is performed, 16 modified transform coefficients are derived, and the modified transform coefficients can be arranged in the upper left area of the 8x8 area.

Conversely, when inverse RST or LFNST is applied to the 8x8 area in the inverse transformation process performed by the encoding device or the decoding device, among the transform coefficients of the 8x8 domain, the 16 transform coefficients corresponding to the upper left of the 8x8 area may be input in the form of a one-dimensional array according to the scanning order and subjected to matrix operation with a $48 \times 16$ transform kernel matrix. That is, the matrix operation in this case can be expressed as ($48 \times 16$ matrix) * ($16 \times 1$ transform coefficient vector) = ($48 \times 1$ modified transform coefficient vector). Here, since the nx1 vector can be interpreted in the same sense as an nx1 matrix, it can also be expressed as an nx1 column vector. Also, * means matrix multiplication operation. When this matrix operation is performed, 48 modified transform coefficients can be derived, 48 modified transform coefficients may be arranged in the upper left, upper right, and lower left areas of the 8x8 area, except for the lower right area.

The following drawings are made to explain a specific example of the present specification. Since the names of specific devices or names of specific signals/messages/fields described in the drawings are provided as examples, the technical features of the present specification are not limited to the specific names used in the drawings below.

In the following, various embodiments extending the LFNST described above are discussed.

**Example 1: Method for constructing a region of interest (ROI) representing an input data area based on forward LFNST**

Forward LFNST receives as input the transform coefficients to which the first transform is applied. In this case, instead of receiving all transform coefficients as inputs, transform coefficients belonging to a predefined specific region within the transform block may be received as inputs.

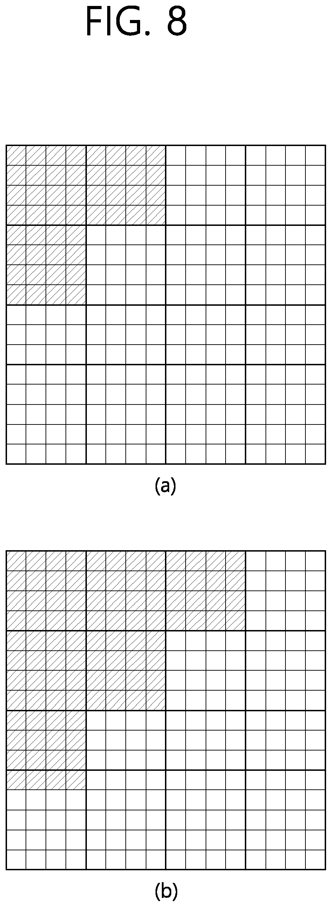

(a) of FIG. 8 shows an example of a forward LFNST input area in the VVC standard, and up to the third position in the scan sequence for a 4x4 subblock is set as the corresponding input area. Hereinafter, this input region, that is, the region of input transform coefficients input for the forward LFNST is referred to as Region Of Interest or ROI. (b) of FIG. 8 shows that 4th to 6th subblocks are added to the ROI in the scan order of the 4x4 subblock shown in (a) of FIG. 8 to the ROI. That is, since the ROI is composed of six 4x4 sub-blocks, the ROI in (b) of FIG. 8 is composed of 96 samples based on the samples (transform coefficients to which the first transform is applied here). Compared to the ROI of (a) of FIG. 8 used for VVC, in case of (b) of FIG. 8, more primary transform coefficients can be considered in the LFNST. An extended LFNST (LFNST) based on such an extended ROI can provide higher encoding performance for a larger block (i.e., larger than or equal to 16x16) than the existing VVC LFNST.

When a non-separate transformation matrix is derived based on N samples belonging to the ROI, an NxN transformation matrix is derived when the corresponding transformation matrix is a square matrix. Here, when the R described with reference to FIG. 7 is applied for the reduced conversion, the R value may be equal to or smaller than N, the R value can be interpreted as the number of output transform coefficients derived by applying the LFNST from the perspective of the forward LFNST. Therefore, the dimension of the LFNST transformation kernel corresponding to (b) of FIG. 8 is not only 96x96, but also 16x96, 32x96, 48x96, 64x96, 80x96, etc. (In this example, it can be seen as a $16m \times 96$ matrix ($m \geq 1$)). At this time, only cases in which the number of output conversion coefficients is a multiple of 16 are allowed, and the R value may be any positive integer equal to or smaller than N (i.e., 96). When generating an Rx96 matrix from a 96x96 square matrix, it can be generated by sampling R rows from the 96x96 matrix based on the forward LFNST. If the rows constituting the 96x96 matrix are arranged in order of importance from the top, the Rx96 matrix can be constructed by sequentially sampling R rows from the top.

The ROIs in (a) and (b) of FIG. 8 are composed of 48 and 96 input samples (input conversion coefficients or input data), respectively. The order of reading input samples in the ROI can be set in advance, but basically the order can be arbitrarily set. More specifically, when the forward LFNST matrix applied to an arbitrary ROI is an RxN matrix (i.e., the ROI consists of N input samples), even if it changes the order in which input samples are read, if it rearranges the N column vectors according to the changed order, Compared to before the change, the output value does not change regardless of the order of the input samples (the output value consists of R transform coefficients).

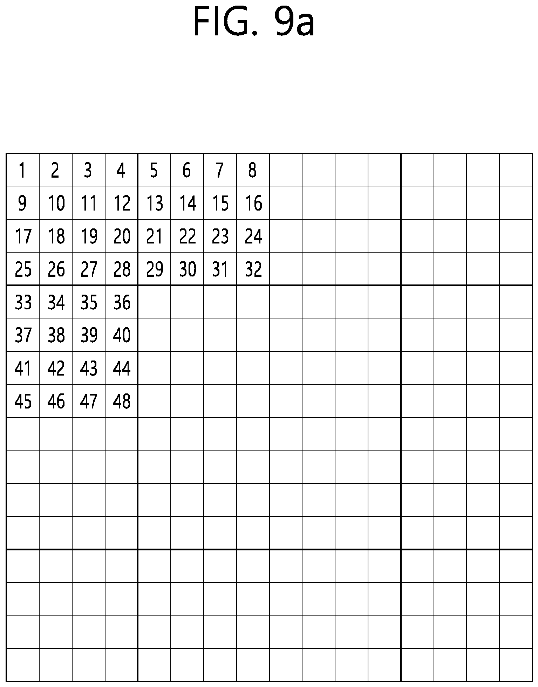

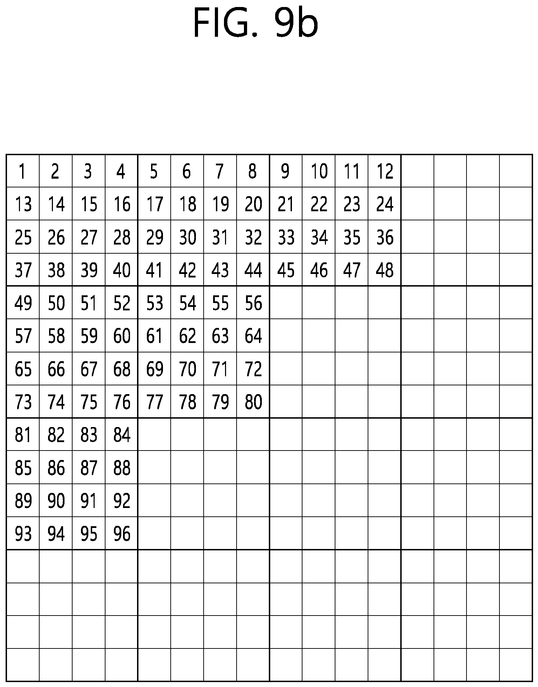

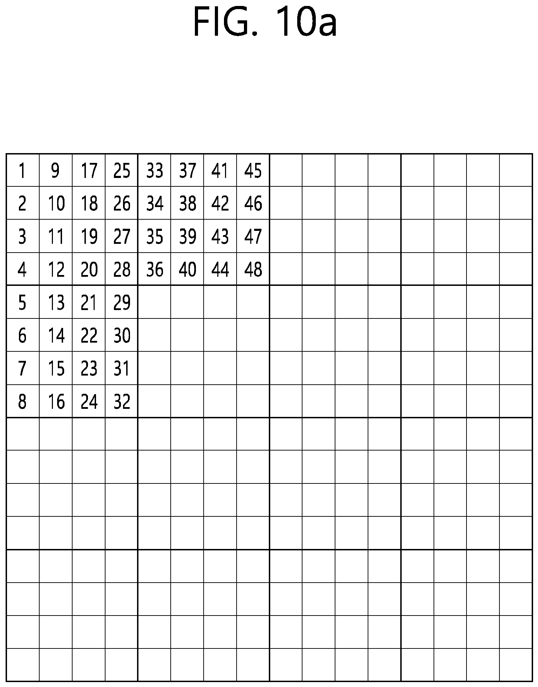

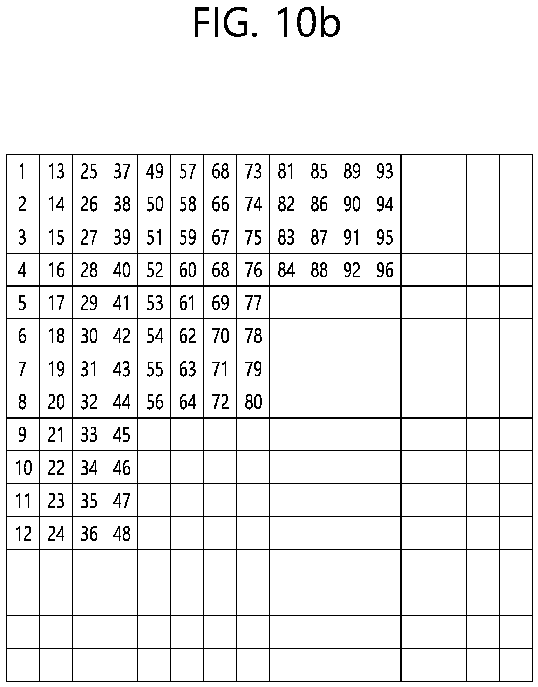

Meanwhile, for a specific forward LFNST transformation matrix (that is, assuming that the position of column vectors is fixed), the input samples constituting the ROI may be read in the order shown in FIG. 9 or FIG. 10 and configured as an input vector. FIG. 9 and FIG. 10 show the order of reading input data from ROI according to the intra prediction mode.

FIG. 9a and FIG. 10a correspond to (a) of FIG. 8, and FIG. 9b and FIG. 10b correspond to (b) of FIG. 8. If, like VVC LFNST, when applying symmetry centered on mode 34 for intra prediction modes, for modes -14 to -1 and 2 to 33 in FIG. 5, the row priority order is applied as shown in FIG. 9a and FIG. 9b, for modes 35 to 80, the column priority order of FIG. 10a and FIG. 10b can be applied. For modes 0, 1, and 34 indicating the planar mode and the DC mode, the order of FIG. 9a and FIG. 9b may be applied as it is, FIG. 9a and FIG. 9b or FIG. 10a and FIG. 10b may be applied for each mode.

As another example of the ROI, the upper left quadrangular region of the transform block may be set as the ROI. That is, in the MxN transform block, the upper left $m \times n$ ($m \leq M$, $n \leq N$) region can be set as the ROI, from the forward LFNST point of view, the number of input samples (transform coefficients after the first transform) is $m \times n$. In a more specific embodiment, both m and n may be 8, and the dimension of the forward LFNST matrix may be R $\times$ 64 (R is equal to or less than 64, examples of R values are 16, 32, 48, 64, etc.). A method of selecting R rows from an mn $\times$ mn square matrix (e.g., a 64x64 matrix) may be the same as the method of generating an Rx96 matrix from a 96x96 described above.

Meanwhile, the ROI may not be composed of only 4x4 sub-blocks as shown in FIG. 8. In the VVC standard, a 4x4 subblock may correspond to a transform group (Coefficient Group, CG) for transform blocks to which LFNST may be applied, these CGs are not necessarily 4x4 sub-blocks. According to an example, the CG may be any predefined p $\times$ q sub block other than a 4x4 sub block. Even if a sub-block (CG) of a size other than the 4x4 sub-block is applied, regardless of the sub-block configuration, the order of reading the ROI input samples of the forward LFNST may follow a specific order determined as shown in FIG. 9a and FIG. 9b or FIG. 10a and FIG. 10b, transform coefficients output by the forward LFNST may be arranged according to the scan order of the corresponding CG and transform coefficients.

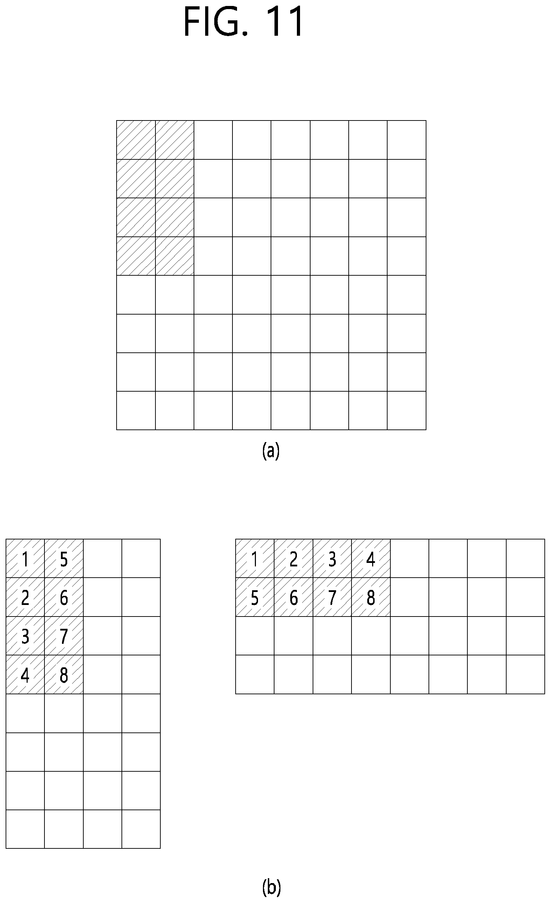

If the ROI is non-square (i.e. m ≠ n for the upper left area m $\times$ n), symmetry between intra prediction modes that are symmetric with respect to one MxN transform block (e.g., modes 24 and 44 as two symmetrical modes around mode 34) cannot be used. FIG. 11 is a diagram illustrating a non-square ROI according to an embodiment of the present document. As shown in (a) of FIG. 11, when the ROI is non-square, when reading input samples in a row-major direction and in a column-major direction, symmetry cannot be used because the phases of the transform coefficients are not aligned for both cases. In this case, two symmetric modes in one MxN block cannot share the LFNST kernel by using the symmetry of the prediction direction, however, between the MxN transform block and the NxM transform block, the symmetry of the intra prediction mode, which is symmetric about the 34th mode, can be utilized.

For example, as shown in (b) of FIG. 11, when the ROIs in the MxN block and the NxM block are the upper left mxn region and the nxm region, respectively, input samples can be read according to the order shown in (b) of FIG. 11 for modes 2 and 66. That is, for mode 2, input samples are read according to the left order of (b) of FIG. 11, for the 66th mode, input samples can be read according to the right order of (b) of FIG. 11. If the input samples are read by utilizing the symmetry of the two prediction modes in this way, the same LFNST kernel can be applied to the two ROIs in (b) of FIG. 11.

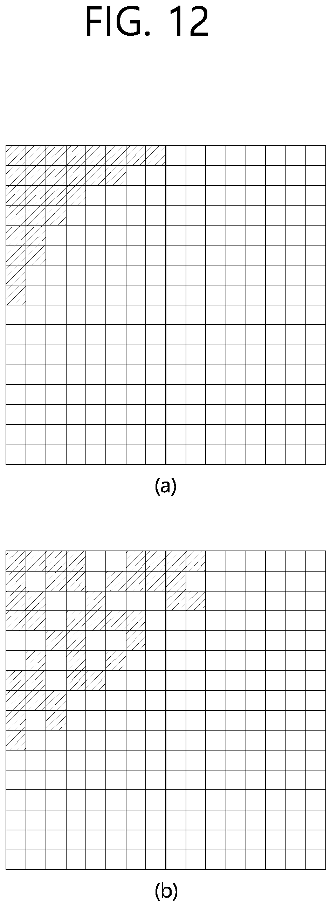

According to another example, ROIs with somewhat irregular shapes can also be applied to the LFNST. FIG. 12 is a diagram illustrating an irregularly shaped ROI according to an embodiment of the present document. As shown in (a) of FIG. 12, the ROI may be composed of lines having different lengths, as shown in (b) of FIG. 12, the ROI may be composed of segments of non-contiguous samples. When applying the forward LFNST, the LFNST kernel can be applied after constructing an input vector by collecting input samples according to the pattern shown in FIG. 12, when applying the inverse LFNST, outputs generated by multiplying the corresponding kernel matrix can be arranged according to the pattern shown in FIG. 12.

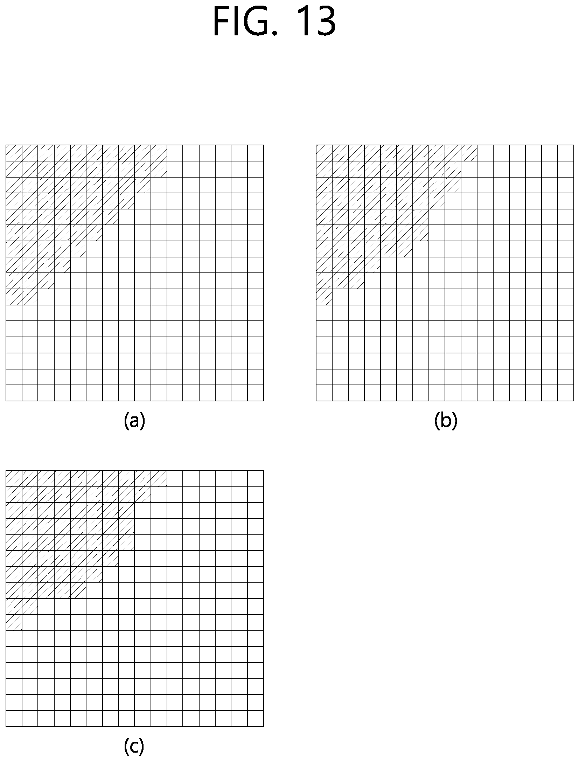

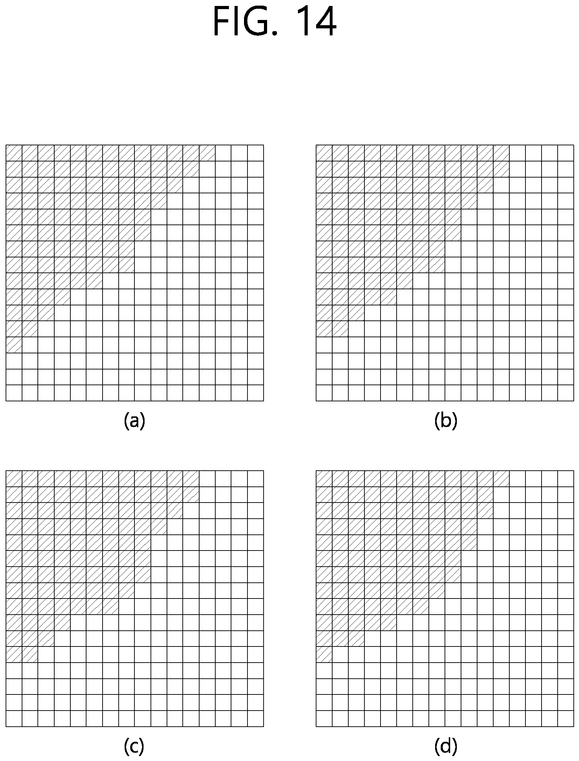

According to another example, the ROI may have a complex shape, such as having different lengths for each line or consisting of several segments for each line, rather than a 4x4 sub-block unit or simple rectangular shape as shown in FIG. 8. FIG. 13 is a diagram illustrating a 64-sample ROI having an irregular shape according to an embodiment of the present document, FIG. 14 is a diagram showing a 96-sample ROI having an irregular shape.

As shown in FIG. 13 and FIG. 14, the ROI has a complicated shape as shown in FIG. 12 compared to FIG. 8 and may be configured in a dense form centered on a DC position. The ROI shown in (a), (b), and (c) of FIG. 13 may consist of 64 locations (64 samples), the boundaries of the ROI are configured to be spaced apart by the same or similar length around the DC. ROIs consisting of 96 locations (96 samples) may be constructed in a similar manner as shown in FIG. 14. That is, as shown in FIG. 13 and FIG. 14, the ROI may be composed of transform coefficients within a specific boundary spaced apart by the same or similar length around the DC position.

Meanwhile, in the VVC standard, different LFNST kernels are applied according to the transform block size. That is, for a 4x4 transform block or a 4xN/Nx4 ($N \geq 8$) transform block (a transform block whose horizontal and vertical lengths are both greater than or equal to 4 and the horizontal or vertical length is 4), an LFNST kernel having a 16x16 matrix form applicable to the upper left 4x4 region is applied (which can be named LFNST _4x4). Also, for transform blocks whose horizontal and vertical lengths are equal to or greater than 8, the ROI is composed of an upper left 4x4 subblock, a 4x4 subblock to the right of the upper left 4x4 subblock, and a 4x4 subblock adjacent to the lower side of the upper left 4x4 subblock. An LFNST kernel with a 16x48 matrix form is applied to the ROI based on the forward LFNST (can be named LFNST_8x8).

LFNST_4x4 and LFNST_8x8 each consist of 4 sets, each set consists of 2 conversion kernels, which set of kernels to apply is determined by the intra prediction mode. For the determined set, which of the two kernels to apply and whether to apply LFNST is specified through signaling of the LFNST index. If the LFNST index value is 0, LFNST is not applied, if it is 1, the first kernel is applied, and if it is 2, the second kernel is applied.

As described above, the LFNST structure in the VVC standard has been simplified and described, but there are also some exceptions. For example, for a 4x4 transform block and an 8x8 transform block, an 8x16 matrix and an 8x48 matrix sampled from the corresponding matrix are applied as forward LFNST, rather than a 16x16 matrix and a 16x48 matrix, respectively, when the MIP prediction mode is applied, the intra prediction mode is regarded as a planner mode and the LFNST set is determined.

Since the LFNST_4x4 and LFNST_8x8 are each composed of 4 LFNST sets, a bundle of LFNST sets named LFNST_4x4 or LFNST_8x8 may be represented by an LFNST set list for convenience of description below.

Meanwhile, in this document, LFNST_8x8 may indicate an LFNST set list applied to a transform block having a horizontal length or a vertical length of 8 with both horizontal and vertical lengths greater than or equal to 8, additionally, an LFNST set list applied to a transform block having both a horizontal length and a vertical length greater than or equal to 16 may be named LFNST_16×16.

Additional embodiments of matrix dimensions and ROIs that LFNST_4x4, LFNST_8×8, and LFNST_16x16 may have are as follows. In the following embodiment, the transformation matrix is based on when forward transformation is applied.

1. LFNST_4x4 can have a 16x16 matrix, and the ROI can be the upper left 4x4 area.
2. LFNST_8x8 can have an Rx48 matrix or an Sx64 matrix, and 16, 32, and 48 are possible as R values and 16, 32, 48, and 64 are possible as S values. The ROI for the Rx48 matrix may be (a) of FIG. 8, and the ROI for the Sx64 matrix may be an 8x8 area in the upper left corner.

3. LFNST_16×16 can have Rx96 matrix or Sx64 matrix or Tx48 matrix, 16, 32, 48, 64, 80, 96 are possible as R values, 16, 32, 48, 64 are available as S values, T values of 16, 32, and 48 are possible. The ROI for the Rx96 matrix may be (b) in FIG. 8 and the ROI for the Sx64 matrix may be an 8x8 area in the upper left corner, and the ROI for the Tx48 matrix may be (a) in FIG. 8.

As an architecture for LFNST _4x4, LFNST_8x8, and LFNST_16x16, any combination of matrix dimensions and ROI suggested in Nos. 1, 2, and 3 above is possible. For example, in the case of LFNST _4x4, the ROI of the upper left 4x4 area is applied to a 16x16 matrix, in the case of LFNST_8x8, the ROI of the upper left 8x8 area is applied to a 32x64 matrix, in the case of LFNST_16x16, the ROI shown in (b) of FIG. 8 may be applied to a 32x96 matrix.

In addition, if any one pair of LFNST_4×4, LFNST_8x8, and LFNST_16×16 has the same matrix dimension, it can share the LFNST set and LFNST kernel for that pair. For example, if the matrix dimension of LFNST_8×8 is 32x64 and the matrix dimension of LFNST_16×16 is 32x64, the same LFNST set list can be assigned to LFNST_8x8 and LFNST_16x16, and the same ROI can be set (for example, the ROI can be set to the upper left 8x8 area).

As another example, when the matrix dimension of LFNST_8×8 is 32x48 and the matrix dimension of LFNST_16×16 is 32x48, the same LFNST set list can be allocated to LFNST_8x8 and LFNST_16x16, and the same ROI can be set (for example, the ROI can be set as shown in (a) of FIG. 8).

On the other hand, when inverse LFNST is applied, when an input vector is constructed with R transform coefficients as input and the left side of the input vector is multiplied by an NxR matrix, N output samples (output transform coefficients) are generated. Here, the NxR matrix becomes a transposed matrix of the RxN matrix in the forward LFNST, and N output samples may be arranged in ROIs of FIGS. 8 to 14. When arranged in the ROI, the order shown in FIG. 9 or FIG. 10 may be followed according to the intra prediction mode value. For example, when utilizing symmetry between intra prediction modes, the row priority order of FIG. 9 is applied to intra prediction modes -14 to -1 and 2 to 33, the column priority order of FIG. 10 can be applied to modes 35 to 80. Regarding modes 0, 1, and 34, which indicate planar mode and DC mode, the order of FIG. 9a and FIG. 9b may be applied to all, or the order of FIG. 9a and FIG. 9b or FIG. 10a and FIG. 10b may be applied for each mode.

Meanwhile, according to an embodiment, a method of deriving a transformation matrix for a small (subset) ROI from a large (superset) ROI is proposed.

If the ROI consists of L locations, a forward transformation matrix for a corresponding ROI is composed of L column vectors vi as follows (i = 1, 2, ..., L-1, L), and each vi may be composed of an Rx1 vector. That is, the forward matrix G becomes an RxL dimensional matrix as shown in the equation below, and the R value may be less than or equal to L).

[Equation 6]

$$G = [\quad v_1 \quad v_2 \quad \cdots \quad v_{L-1} \quad v_L \quad]$$

If ROIs, which are subsets, are composed of some of the L positions, a set of the partial positions may be referred to as J, and position indices belonging to J may be set to j 1, j2, ..., jM. That is, the set J is composed of a total of M locations, and the M locations also belong to the superset ROI. At this time, the forward transformation matrix H for the subset ROI may be composed of $v_{j1}$, $v_{j2}$, ..., $v_{jM}$ as shown in the following equation.

[Equation 7]

$$H = [\quad v_{j1} \quad v_{j2} \quad \cdots \quad v_{jM} \quad]$$

The H has RxM matrix dimensions, in the case of constructing H' in which the number of rows from H is set to be less than or equal to R, the forward transformation matrix H' may be composed of $v'_{j1}$, $v'_{j2}$, ..., $v'_{jM}$. If $v'_{j1}$, $v'_{j2}$, ..., $v'_{jM}$ are Wx1-dimensional vectors, then W is less than or equal to R. When selecting W rows from the R rows constituting H, in principle, arbitrary rows can be selected, but assuming that R rows are arranged from top to bottom in order of importance, W rows can be obtained by sampling W rows from the top among the R rows.

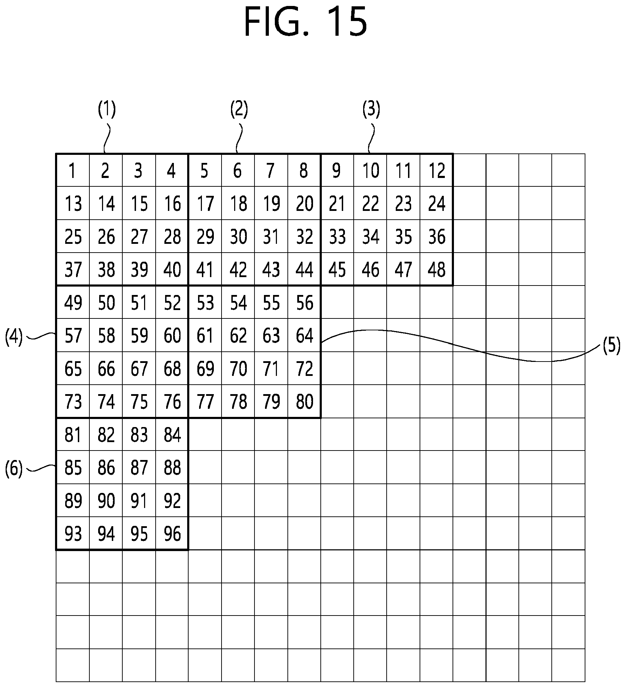

FIG. 15 is a diagram illustrating a super set ROI and a subset ROI according to an embodiment. In FIG. 15, ROIs are assigned sequential numbers from (1) to (6) for each 4x4 subblock.

Assuming a super set ROI consisting of 96 locations, the ROI of FIG. 15 may be the same as (b) of FIG. 8. If LFNST is applied to the ROI, output transform coefficients can be derived by reading input samples in the order of (b) of FIG. 9 to construct a one-dimensional vector and then multiplying by a forward transform matrix. According to the intra prediction mode, the input vector may be constructed according to the order presented in (b) of FIG. 10.

The forward transformation matrix corresponding to FIG. 15 can be Rx96, and R values of 16, 32, 48, 64, 80, 96, etc. are possible. According to an embodiment, a specific ROI may be configured to be a subset of FIG. 15 corresponding to the size of a transform block, and the subset may be configured in various ways. When the size of the transform block is classified as follows, the forward transformation matrix sampled from the possible ROI and matrix G for each shape of the transform block (that is, from the Rx96 transformation matrix) can be derived as follows.

1. 4x4 transform block

The ROI may be composed of a 4x4 sub-block (1) of FIG. 15, a transformation matrix can be constructed by extracting column vectors vi for 16 positions corresponding to the 4x4 subblock (1) from the matrix G (Rx16 matrix). If the number of rows of the transformation matrix constructed is less than or equal to R, as many rows as the required number of rows can be extracted from the corresponding $R \times 16$ matrix, for example, as many rows as necessary may be sequentially extracted from the topmost row of the $R \times 16$ matrix. If R' rows are extracted, R' transform coefficients may be generated by applying an R'x16 matrix as a forward transformation matrix.

2. 8x4 transform block

The ROI may be composed of only the 4x4 sub-block (1) of FIG. 15 or may be composed of the 4x4 sub-blocks (1) and (2). Similar to the first 4x4 block case, a forward transformation matrix can be constructed by extracting column vectors for necessary positions from G and then extracting only the necessary number of rows (R'). When the ROI is composed of only the 4x4 subblock (1), an R'x16 matrix is applied, and when the ROI is composed of the 4x4 subblocks (1) and (2), an R'x32 matrix may be applied.

3. 4x8 transform block

The ROI may be composed of only the 4x4 sub-block (1) of FIG. 15 or may be composed of the 4x4 sub-blocks (1) and (4). Similar to the first 4x4 block case, a forward transformation matrix can be constructed by extracting column vectors for necessary positions from G and then extracting only the necessary number of rows (R'). When the ROI is composed of only the 4x4 subblock (1), an R'x16 matrix is applied, and when the ROI is composed of the 4x4 subblocks (1) and (4), an R'x32 matrix may be applied.

4. Nx4 (N ≥16) transform block

The ROI is composed of only the 4x4 sub-block (1) of FIG. 15, or it consists of 4x4 sub-blocks (1) and (2), or it may be composed of (1), (2), and (3) 4x4 sub-blocks. Similar to the first 4x4 block case, a forward transformation matrix can be constructed by extracting column vectors for necessary positions from G and then extracting only the necessary number of rows (R'). When the ROI is composed of only the 4x4 subblock (1), an R'x16 matrix is applied, and when the ROI is composed of the 4x4 subblocks (1) and (2), an R'x32 matrix is applied, in the case of (1), (2), and (3) 4x4 subblocks, an R'x48 matrix may be applied.

5. 4xN (N ≥ 16) transform block

The ROI consists of only the 4x4 sub-block (1) in FIG. 15, or it may consist of (1) and (4) 4x4 sub-blocks, or it may consist of (1), (4) and (6) 4x4 sub-blocks. Similar to the first 4x4 block case, a forward transformation matrix can be constructed by extracting column vectors for necessary positions from G and then extracting only the necessary number of rows (R'). When the ROI is composed of only the 4x4 subblocks (1), an R'x16 matrix is applied, and when the ROI is composed of the 4x4 subblocks (1) and (4), an R'x32 matrix is applied, an R'x48 matrix may be applied to the case of the 4x4 subblocks (1), (4), and (6).

6. 8x8 transform block

The ROI consists of only the 4x4 sub-block (1) in FIG. 15, or it consists of (1), (2) and (4) 4x4 sub-blocks, or it may be composed of (1), (2), (4), and (5) 4x4 sub-blocks. Similar to the first 4x4 block case, a forward transformation matrix can be constructed by extracting column vectors for necessary positions from G and then extracting only the necessary number of rows (R'). When the ROI is composed of only "(1) 4x4 sub-block", an R'x16 matrix is applied, if it is composed of (1), (2), and (4) 4x4 subblocks, an R'x48 matrix is applied, in the case of (1), (2), (4), and (5) 4x4 subblocks, an R'x64 matrix may be applied.

7. Nx8 (N ≥ 16) transform block

The ROI consists of only the 4x4 sub-block (1) in FIG. 15, or it consists of (1), (2) and (4) 4x4 sub-blocks, or it consists of (1), (2), (4), and (5) 4x4 sub-blocks, or it can be composed of (1), (2), (3), (4), and (5) 4x4 subblocks. Similar to the first 4x4 block case, a forward transformation matrix can be constructed by extracting column vectors for necessary positions from G and then extracting only the necessary number of rows (R'). In the case where the ROI is composed only of "(1) 4x4 sub-block", an R'x16 matrix is applied, if it is composed of (1), (2), and (4) 4x4 subblocks, an R'x48 matrix is applied, in the case of (1), (2), (4), and (5) 4x4 subblocks, an R'x64 matrix is applied, in the case of (1), (2), (3), (4), and (5) 4x4 subblocks, an R'x80 matrix may be applied.

8. 8xN (N ≥ 16) transform block

The ROI includes only the 4x4 sub-block (1) of FIG. 15, or it consists of (1), (2) and (4) 4x4 sub-blocks, or it consists of (1), (2), (4), and (5) 4x4 sub-blocks, or it can be composed of (1), (2), (4), (5), and (6) 4x4 subblocks. Similar to the first 4x4 block case, a forward transformation matrix can be constructed by extracting column vectors for necessary positions from G and then extracting only the necessary number of rows (R'). In the case where the ROI is composed only of "(1) 4x4 sub-block", an R'x16 matrix is applied, if it is composed of (1), (2), and (4) 4x4 subblocks, an R'x48 matrix is applied, in the case of (1), (2), (4), and (5) 4x4 subblocks, an R'x64 matrix is applied, when it is composed of (1), (2), (4), (5), and (6) 4x4 subblocks, an R'x80 matrix may be configured.

9. 16x16 or larger transform block (that is, when both the horizontal and vertical lengths are greater than or equal to 16)

The ROI is the same as the ROI presented in FIG. 15 (that is, composed of 4x4 subblocks from (1) to (6)), and the corresponding forward transformation matrix may be an Rx96 matrix.

16, 32, 48, 64, 80, 96, etc. are possible as R values, the R' value may be different for each block shape, but the R' value is set to 16 for 4x4/4xN/Nx4 (N ≥ 8) transform blocks and 8x8 transform blocks, for the remaining cases, the value of R' may be set to 32. Alternatively, the R' value is set to 16 for 4x4/4xN/Nx4 (N ≥ 8) transform blocks and 8x8/8xN/Nx8 (N ≥ 8) transform blocks, for the remaining cases, the value of R' may be set to 32. In another embodiment, the R' value is set to 16 for a 4x4/4xN/Nx4 (N ≥ 8) transform block, for the remaining cases, the value of R' may be set to 32.

## Example 2: Method for constructing output data based on forward LFNST

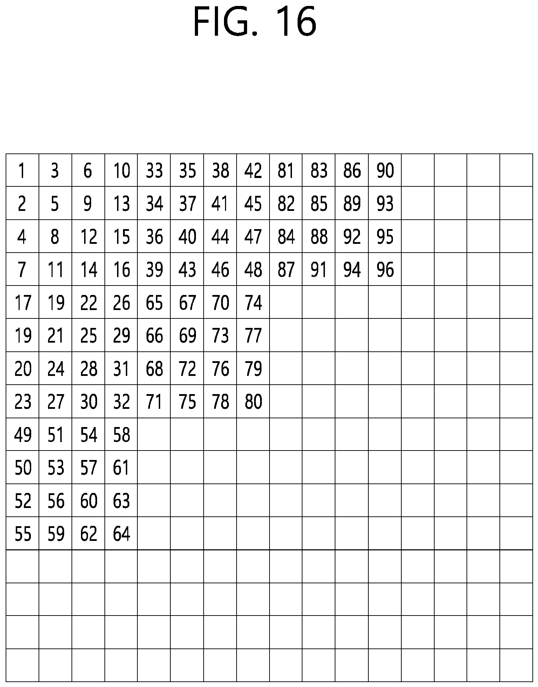

In the VVC standard, the scan order for transform coefficients is hierarchically configured. There is a scan order of CGs and an internal scan order for each CG. FIG. 16 is a diagram showing the order of scanning these transform coefficients. As shown in FIG. 16, the scanning sequence proceeds in a diagonal direction from lower left to upper right. In FIG. 16, a small square represents one transform coefficient and a number inside the small square indicates a scan order.

If scanning from the lower left to the upper right once in CG units is one scan line, the first scan line consists of 1 CG and the second and third scan lines consist of two and three CGs, respectively, according to the same method, the Nth scan line is also composed of a plurality of CGs.

The ROIs shown in (a) of FIG. 8 and (b) of FIG. 8 are both composed of these CG-unit scan lines. (a) of FIG. 8 and (b) of FIG. 8 show an ROI composed of the first two and three scan lines, respectively, naturally, the ROI may consist of more scan lines.

As described above, when the number of output transform coefficients in the forward LFNST criterion is R and the number of input samples is N, R may be set less than or equal to N. In particular, as shown in FIG. 8, R may be set to a multiple of 16 (i.e., R = 16k, k ≥ 1). This is set so that the number of output transform coefficients of the forward LFNST is a multiple of the number of samples present in one CG, considering the case where the CG for the transform block to which the LFNST is applied is a 4x4 subblock. Therefore, if R is set to a multiple of 16, transform coefficients obtained by applying forward LFNST can be designed to be arranged only in specific 4x4 subblocks. Through this design, the residual coding part and the LFNST index signaling design can be further simplified.

For example, if a transform coefficient is parsed in a region other than a region in which the LFNST transform coefficient may exist, signaling of the LFNST index may be omitted and it may be inferred that the LFNST is not applied. Here, if an area where LFNST transform coefficients can exist is configured in units of 4x4 subblocks and residual coding is performed in units of corresponding 4x4 subblocks, it can be performed more simply to check whether a transform coefficient exists in an area other than the area where the LFNST transform coefficient can exist.

According to another embodiment, the CG may have a shape other than a 4x4 sub-block, and in this case (e.g. m × n block, m ≠ n), the R value may be set to a multiple of m × n. In addition, CGs in which forward LFNST output transform coefficients may exist may be composed of the first k CGs arranged according to the scanning order of the CGs.

Basically, the output coefficients of the forward LFNST can be arranged according to the transform coefficient scanning order. Since row vectors of the forward LFNST kernel are usually arranged from top to bottom in order of importance, assuming that the transform coefficients constituting the output vector are arranged in order from top to bottom (here, the output vector is assumed to be a column vector), coefficients can be arranged sequentially, starting with more significant coefficients. It is usually assumed that the order of scanning the transform coefficients is to scan from the most important coefficients, as the distance from the DC position is increased by scanning from the DC position indicated by the upper left position, conversion coefficients of less importance are arranged and mainly have a value of 0 or close to 0. Therefore, it may be advantageous in terms of coding performance to sequentially arrange the output transform coefficients of the forward LFNST according to the scan order starting from the DC position. Also, in many cases, the residual coding part is designed to increase coding efficiency when transform coefficients having 0 or values close to 0 frequently appear as the distance from the DC position increases.

Meanwhile, the output transform coefficients of the forward LFNST do not necessarily have to be arranged according to one fixed scan order. That is, according to another embodiment, the output transform coefficients of the LFNST may be sorted according to an order other than the scan order.

If it is statistically determined that a scan order other than the scan order in the VVC standard is suitable for the corresponding LFNST output coefficient, in the case where it is known in advance whether or not to apply the LFNST before performing the residual coding, a scan order specific to the LFNST may be applied instead of a previously determined scan order. In addition, when the optimal scan order varies depending on the coding context such as the intra prediction mode, according to an example, a different scan order may be applied to forward LFNST output transform coefficients for each intra prediction mode (or group of intra prediction modes).

Example 3: Method of **applying** various LFNST set lists/LFNST sets/LFNST kernels according to the size of the transform block

According to an example, unlike the LFNST set list, LFNST set, and LFNST kernel configuration per set in VVC (The LFNST kernel configuration per set here refers to which LFNST set consists of how many candidate kernels, etc.), the LFNST set list can be further subdivided and applied according to the size of the transform block.

For example, a different LFNST set list can be applied for every possible transform block shape (i.e., every possible MxN block), the corresponding set list may be expressed as, for example, LFNST_MxN. Alternatively, a corresponding LFNST set list may be applied to each group by grouping transform block shapes. In the case of the VVC standard, it can be seen that two types of LFNST set lists, namely LFNST_4×4 and LFNST_8x8, are applied by dividing into two groups according to the shape of the transform block. Examples of other groupings are as follows.

1. A separate group is set for cases where both the horizontal and vertical lengths of the transform block are equal to or greater than 16, and the LFNST set list applied to the group can be allocated. Here, the LFNST set list may be named LFNST_16x16. When combined with the grouping of the VVC standard, it can be divided into three groups as (Group 1) 4x4, 4xN/Nx4 (N $\geq$ 8) transform block, (Group 2) 8x8, 8xN/Nx8 (N $\geq$ 16) transform block, (Group 3) transform block with both width and height greater than or equal to 16, each group and/or the LFNST set list applied to the group may be named LFNST_4x4, LFNST_8x8, or LFNST_16×16.

2. In the grouping in No. 1 above, Group 1 can be further divided into 4x4 transform blocks and 4xN/Nx4 (N $\geq$ 8), it can be divided into Group 1A and Group 1B. Group 2 can also be divided into 8x8 transform blocks and 8xN/Nx8 (N $\geq$ 16) transform blocks, it can be classified as Group 2A and Group 2B. Also, Group 3 can be divided into Group 3A and Group 3B through a specific criterion. For example, 16x16 and 16×N/N×16 (N $\geq$ 16) transform blocks may be set as Group 3A, and the remaining cases may be classified as Group 3B.

In addition, Group 1, Group 2, and Group 3 may or may not be divided into detailed groups as described above. For example, if only Group 1 and Group 3 are divided into detailed groups, all groups may be configured as Group 1A, Group 1B, Group 2, Group 3A, and Group 3B. Naturally, if Group 1, Group 2, and Group 3 are all divided, the groups can be classified as Group 1A, Group 1B, Group 2A, Group 2B, Group 3A, and Group 3B.

In addition to the above two embodiments, grouping can be applied according to various criteria based on the size of the transform block, a corresponding LFNST set list may be assigned to each group. This LFNST set list may be configured differently for each group.

For example, the number of kernels per LFNST set constituting the LFNST set list can be set differently (e.g. For Group 1, the number of LFNST kernels per set is 3, and for Group 2, the number of LFNST kernels per set is given, that is, for Group 1, the number of LFNST kernels constituting the set is set for every three sets, for Group 2, set the number of LFNST kernels that make up the set for every 2 sets), in more detail, the number of kernels constituting the set may be set differently for each LFNST set constituting one LFNST set list.

Alternatively, the number of LFNST sets included in each LFNST set list may be set differently, for example, Group 1 can consist of 18 LFNST sets and Group 2 can consist of 10 LFNST sets. Naturally, the dimension of the kernel matrix may be set differently according to the LFNST set list. Taking the VVC standard as an example, LFNST_4x4 consists of a 16x16 matrix and LFNST_8×8 consists of a 16x48 matrix.

More diversely, the dimension of the kernel matrix may be set differently for each LFNST set constituting the LFNST set list. A specific example of the detailed configuration of the LFNST set list is as follows.

1. Group 1 (LFNST _4x4) consists of 18 LFNST sets, and each LFNST set consists of 3 kernels, and the dimension of the corresponding kernel matrix may be 16x16. Group 2 (LFNST_8x8) consists of 18 LFNST sets, and each LFNST set consists of 3 kernels, and the dimension of the corresponding kernel matrix may be 16x48. Group 3 (LFNST_16x16) consists of 18 LFNST sets, and each LFNST set consists of 3 kernels, and the dimension of the corresponding kernel matrix may be 32x96.

2. In the configuration 1 above, all LFNST sets can be configured with 2 kernels instead of 3 kernels.

3. All LFNST set lists in the above configuration can be configured with a different number of sets than 18. For example, the LFNST set list may consist of 16, 15, 10, 6, or 4 transform sets.

4. In the first configuration, the dimensions of the kernel matrices constituting LFNST_8x8 may be set to 32x48 to 48x48.

5. In the first configuration, the dimensions of the kernel matrices constituting LFNST_16x16 may be set to one of 16x96, 48x96, 64x96, 80x96, and 96x96. Here, 96 represents the number of input samples (input transform coefficients) constituting the ROI in terms of the forward LFNST, and the ROI may be configured as shown in (b) of FIG.

8. If the ROI corresponding to LFNST_16x16 is configured as in (a) of FIG. 8 rather than (b) of FIG. 8, the dimensions of the kernel matrices constituting LFNST_16x16 may be set to one of 16x48, 32x48, and 48x48.

6. Based on No. 1 above, No. 2, No. 3, No. 4, and No. 5 above can be freely combined. For example, by applying number 3, the number of LFNST sets is set to 15, and by applying number 4, the dimensions of the kernel matrices constituting LFNST_8x8 may be set to 32x48.

## Example 4: Method of Applying Multiple LFNSTs to ROIs

In the VVC standard, forward LFNST is applied once for the upper left ROI. Therefore, when the dimension of the kernel matrix for the forward LFNST is RxN in the VVC standard, the number of samples belonging to the corresponding ROI area is N.

If the number of samples belonging to the ROI is greater than the dimension of the input vector multiplied by the corresponding kernel matrix, according to an example, forward LFNST may be applied to a corresponding ROI multiple times.

For example, if the ROI for a 4xN/Nx4 (N $\geq$ 8) transform block is 4x8 or 8x4 instead of the upper left 4x4 block (4x8 for 4xN and 8x4 for Nx4), after dividing the corresponding ROI into two 4x4 sub-blocks, a kernel for LFNST_4x4 may be applied to each.

The output transform coefficient generated by applying the kernel twice for LFNST_4x4 (composed of two output transform coefficient vectors) may be arranged from the DC position of the transform block according to the scan order after the two transform coefficient vectors are concatenated in order to create one vector. Alternatively, the output transform coefficients may be arranged starting from the DC position of the CG corresponding to each 4x4 sub-block position. If the length of the output transform coefficient vector is 16, the above two methods can produce the same result.

Alternatively, according to another example, a 4xN/Nx4 (N $\geq$ 8) transform block may be divided into 4x4 subblocks and then a kernel for LFNST_4x4 may be applied to all subblocks. In this case, in the same manner as in the above example, output transform coefficients may be arranged starting from the DC position or may be divided and arranged in each CG.

As another embodiment, for a specific LFNST set list and a specific LFNST set, the ROI is divided and the LFNST is applied to each divided ROI region, for the rest of the LFNST set list and other LFNST sets, the LFNST can be applied to the ROIs only once without splitting the ROIs. For example, for LFNST _4x4, LFNST may be applied to two or more adjacent 4x4 blocks, and for LFNST_8x8, LFNST may be applied only to the upper left ROI.

As another example, for a transform block whose width and length are both greater than or equal to 16, the ROI may be set as an upper left 16x16 area and the ROI may be divided into four 8x8 blocks. For each 8x8 block, after constructing the input vector of the forward LFNST with the transform coefficients in the upper left, upper right, and lower left 4x4 subblocks constituting the 8x8 block, each kernel for LFNST_8x8 (e.g. 16x48/32x48 matrix) can be applied. The output transform coefficient vector generated by applying forward LFNST to each 8x8 block may be concatenated according to a predetermined order and arranged according to the scan order, or may be arranged according to the scan order from the upper left position inside each 8x8 block.

Also, as described above, the ROI may be set in units of CGs, and the number of samples belonging to the ROI may be greater than the dimension of an input vector to which the forward LFNST kernel is applied. In this case, according to an example, the corresponding ROI may be divided and a specific LFNST may be applied to each divided region. That is, a specific conversion kernel may be applied to each divided region.

For example, for the three 4x4 sub-blocks composed of the first scan line and the second scan line in (b) of FIG. 8, one kernel matrix (which can be a kernel matrix belonging to any LFNST set) having dimensions of 16x48 to 32x48 can be applied, for the three 4x4 sub-blocks composed of the third scan line, other kernel matrices (also in this case, dimensions of 16x48 to 32x48) may be applied.

Of course, the same kernel matrix may be applied to the two divided regions, or a completely different kernel matrix may be applied to the two regions by assigning different LFNST sets. The transform coefficient generated through the two regions may be concatenated like a chain in the same or similar manner as described above and arranged from the DC position of the ROI, or may be arranged from the first position in the scan order in the divided area.

## Example 5: Combination of LFNST and First Order Transformation

In the VVC standard, LFNST can be applied only when DCT-2 is applied to both the horizontal and vertical directions as the primary conversion. Hereinafter, when A and B conversions are applied to the horizontal and vertical directions, respectively, it is expressed as (A, B). For example, when DCT-2 is applied to both the horizontal and vertical directions, it can be expressed as (DCT-2, DCT-2).

According to an embodiment of the present document, LFNST may be applied to a transform block even when other primary transforms are applied other than the case of (DCT-2, DCT-2). That is, image information may be configured such that LFNST is applied even when other primary transforms are applied other than the case of (DCT-2, DCT-2).

In the current VVC standard, in addition to (DCT-2, DCT-2), (DST-7, DST-7), (DCT-8, DST-7), (DST-7, DCT-8), (DCT-8, DCT-8) which are a combination of DST-7 and DCT-8 can be applied as a first order transformation. According to an example, LFNST may also be applied to transform blocks to which primary transforms according to all combinations of DST-7 and DCT-8 are applied.

In another embodiment, image information may be configured such that LFNST is applied only to some combinations rather than all DST-7 and DCT-8 combinations. For example, LFNST may be applied only to (DST-7, DST-7), which has the highest frequency among combinations of DST-7 and DCT-8.

As another embodiment, configurations of primary transforms to which LFNST is applied may be set differently according to intra prediction modes. For example, for planar mode and DC mode, LFNST is allowed to be applied only to (DST-7, DST-7) in addition to (DCT-2, DCT-2), for the horizontal direction mode, only (DST-7, DCT-7) and (DST-7, DCT-8) can be allowed to apply LFNST in addition to (DCT-2, DCT-2).

In the VVC standard, an implicit MTS may be applied in addition to an explicit MTS. When the implied MTS is applied, since DST-7 can be applied for the case where the horizontal and vertical lengths are 4 or more and 16 or less, among possible combinations of first-order transformations, DCT-8 does not exist and only combinations of DCT-2 and DST-7 are possible. According to an example, among (DCT-2, DCT-2), (DST-7, DCT-2), (DCT-2, DST-7), (DST-7, DST-7) possible in the implicit MTS, LFNST can be applied only for (DCT-2, DCT-2) and (DST-7, DST-7). Alternatively, image information may be configured so that LFNST can be applied to all four combinations.

In the VVC standard, since the MTS index is signaled after the LFNST index is signaled, it is unknown which primary transform is applied when the LFNST index is signaled, except when the primary transform is implicitly determined.

According to the signaling order of the VVC standard, the LFNST index is signaled regardless of the MTS, after signaling the LFNST index, the MTS index is signaled. If LFNST is applied only to specific primary transforms and follows the signaling order of the VVC standard for transform indices, depending on whether LFNST is applied, allowable primary transform candidates may be designated by the MTS index. That is, primary transform candidates may be configured depending on whether or not LFNST is applied.

For example, if LFNST is applied only to (DCT-2, DCT-2) and (DST-7, DST-7), the MTS index may consist of one bin, if the value is 0, (DCT-2, DCT-2) is indicated, and if the value is 1, (DST-7, DST-7) can be specified.

If the video information is configured to signal the MTS index first, which primary transform is applied can be known before LFNST index signaling. In this case, whether or not to signal the LFNST index is determined through the primary transform and coding context (e.g., intra prediction mode), video information may be configured such that the LFNST index is signaled only when signaling of the LFNST index is required.

According to an example, in addition to the primary transform supported by the VVC standard, other primary transforms may also be combined with the LFNST. Other primary transforms that can be combined with LFNST are as follows.

1. In addition to DCT-2, DST-7, and DCT-8 supported by the VVC standard, other sine conversion or cosine conversion is possible. For reference, there are eight types of sine transform and cosine transform (i.e. DST-1 to DST-8, DCT-1 to DCT-8).

2. Any transformation other than sine and cosine transformations is possible. For example, a Karhunen Loeve Transform (KLT) obtained through training is possible. The KLT may be applied in a non-separate transform form or a separative transform form.

If the KLT is applied in the form of non-separate transformation to the MxN transform block, the corresponding KLT has the form of MN × MN in the case of a square matrix. For KLT in the forward direction, if it is wanted to obtain fewer than MN output transform coefficients by applying only fewer than MN transform basis vectors, a matrix having the dimension form R × MN (R ≤ MN) can be used for transformation.

In addition, if KLT in the form of a non-separate transform is applied to an MxN block, different MxM transforms may be applied to N rows and different NxN transforms may be applied to M columns.

If the KLT is applied in the form of a separate transform, separate transforms can be applied to the horizontal and vertical directions. For example, if KLT in the form of separate transform is applied to the MxN transform block, MxM transform is applied in the horizontal direction (Similarly, an R × M (R ≤ M) transform can be applied to obtain output transform coefficients of fewer than M.), in the vertical direction, an NxN transformation can be applied (Similarly, S × N (S ≤ M) transforms can be applied to obtain fewer than N output transform coefficients.).

More specifically, if the forward KLT is the criterion, when applying an NxN transformation in the vertical direction over M columns after applying the MxM transformation for N rows in the horizontal direction, an MxN output transform coefficient block can be derived.

Conversely, it is also possible to apply transformation from the vertical direction and then apply transformation to the horizontal direction. In addition, fewer output transform coefficients may be derived as described above in order to reduce complexity such as a computational amount and a memory requirement. To this end, if RxM transform and S×N transform are applied instead of MxM transform and NxN transform, respectively, an R×S output transform coefficient block can be derived as a result.

In the case of KLT in the form of non-separate conversion, a different KLT can be applied for each block shape (MxN), in the case of KLT in the form of separate transform, a different KLT may be applied for each transform coefficient length. That is, different KLTs may be applied according to lengths of 2, 4, 8, 16, 32, 64, 128, and the like.

In the case of an intra-prediction coding block, residual data having different statistical characteristics may be generated according to an intra-prediction mode or an applied coding tool. Accordingly, different KLTs may be applied according to intra prediction modes or coding tools (e.g. MIP, ISP, MRL). That is, an optimal KLT that can best decorate the correlation can be used for transformation according to the intra prediction mode or the statistical characteristics of the coding tool. Since applying a different KLT for each intra prediction mode can take up a large amount of memory, different KLTs can be applied to each intra prediction mode group (e.g. 0 and 1, 2 to 10), it can also reduce the number of KLTs needed.

3. In the VVC standard, the primary transform can be applied up to length 64 (when the length of one side of the transform block is 64 or less), for DST-7 and DCT-8, not DCT-2, the primary transform can be applied up to length 32 (when the length of one side of the transform block is 32 or less). In future standards other than the VVC standard, larger primary transforms of various lengths may be applied. For example, DCT-2 can be applied to lengths 128 and 256 greater than 64, DST-7 and DCT-8 can also be applied to lengths greater than 64 (e.g. 64, 128, 256) but not up to length 32.

4. As a primary transform that can be combined with LFNST, it is also possible to apply transform skip in the vertical or horizontal direction. More specifically, when denoting transform skip as TS and non-transform skip transform (e.g. sine transform, cosine transform, KLT) as Non-TS, (Non-TS, TS) or (TS, Non-TS) can be combined with LFNST. As an example of another primary transform that can be combined with LFNST, (TS, TS) is also possible, this case can be regarded as a case where the primary transform is omitted and the LFNST is directly applied.

Also, according to an example, a combination with a primary transform may be configured differently for each LFNST set list, LFNST set, and LFNST kernel.

For example, for a transform block of a specific size or a transform block equal to or larger than a specific size (e.g. a transform block whose width and height are both greater than or equal to 16), image information can be configured so that LFNST can be applied only to specific primary transforms (e.g. (DCT-2, DCT-2) only). According to another example, for a transform block having a specific block shape (e.g. a transform block with a horizontal length of less than 8 or a vertical length of less than 8), image information can be configured so that LFNST can be applied to other primary transforms (e.g. a combination of DST-7 and DCT-8) other than DCT-2.

Generalizing the above example, a list of primary transforms that can be combined with LFNST can be configured differently for each shape (MxN) of a transform block.

For example, primary transform lists that can be combined for a 4x4 transform block may be (DCT-2, DCT-2) and (DST-7, DST-7), the primary transform list that can be combined for the 8x16 transform block can be (DCT-2, DCT-2) and KLT in the form of separate transforms.

If the LFNST index is signaled before the MTS index, whether or not LFNST is applied is first identified through the LFNST index, after that, whether to signal the MTS index can be determined in consideration of the size of the current transform block. Here, if the MTS index is not signaled, (DCT-2, DCT-2) may be considered to be applied as a default.

On the other hand, if the MTS index is signaled before the LFNST index, through the MTS index, it is identified which primary transform is applied (Of course, there are cases where the primary transform applied regardless of the MTS index is implicitly determined.), after that, whether to signal the LFNST index can be determined by considering the size of the current transform block together. Here, if the LFNST index is not signaled, it may be considered that LFNST is not applied.

Alternatively, according to another example, different LFNST set lists, LFNST sets, and LFNST kernels may be applied according to the primary transform.

For example, if LFNST is applicable for (DST-7, DST-7), by separately training the LFNST set list, LFNST set, and LFNST kernel which are specific to (DST-7, DCT-7), LFNST set list, LFNST set, and LFNST kernel derived through training other than the existing LFNST set list, LFNST set, and LFNST kernel can be applied.

Meanwhile, as in the previous example, the LFNST set list can be grouped into LFNST_4x4, LFNST_8x8, and LFNST_16x16 according to the block shape. Similarly, separate LFNST set lists that can be combined with (DST-7, DST-7) can also be grouped, corresponding LFNST set lists can be named LFNST_DST7_4x4, LFNST_DST7_8x8, and LFNST_DST7_16×16. At this time, when LFNST_DST7_4x4, LFNST_DST7_8x8, and LFNST_DST7_16x16 are compared with LFNST_4x4, LFNST_8x8, and LFNST_16x16, the number of LFNST sets, the number of LFNST kernels per set, and the dimensions of kernels may be configured differently. More generally, if different LFNST set lists, LFNST sets, and LFNST kernels are applied to each primary transform or primary transform group, the configuration of the corresponding LFNST set list, LFNST set, and LFNST kernel may be different.

## Example 6: Application of separable LFNST

According to an example, LFNST may be applied in the form of a separate transform like a primary transform. That is, LFNST can be applied to the ROI in the horizontal and vertical directions, respectively.

For example, when the ROI is the upper left P × Q block of the transform block, based on the forward LFNST, first, the PxP transformation matrix can be applied to Q rows in the horizontal direction, and then the Q×Q transformation matrix can be applied to P columns in the vertical direction. The only difference is the form and application method of LFNST (i.e., it consists of horizontal and vertical transformations), the configuration of the LFNST set list, the LFNST set, and the number of LFNST kernels per set may be configured in the same way as the LFNST in the non-separate conversion form described above. Also, different ROIs may be set for each block size (MxN).

Also, when applying LFNST in the form of a non-separate transform, the same LFNST kernel may be applied to each line (row or column of transform coefficient) or different LFNST kernels may be applied. More generally, different LFNST set lists, LFNST sets, and LFNST kernels can be applied to each line. Of course, different LFNST sets may be applied for each intra prediction mode (or mode group) or coding tool.

According to an example, LFNSTs in the form of separate transformations may be classified according to the length of a line (i.e. 4, 8, 16, 32, 64, 128, etc.). LFNST in the form of non-separate conversion could be grouped according to the block shape as described above (e.g. LFNST_4x4, LFNST_8x8, LFNST_16x16), LFNST in the form of separate conversion can be grouped according to the length of the line.

In addition, the ROI was set in the form of a two-dimensional region in the LFNST in the form of non-separate transformation, in the LFNST in the form of a separate transform, a subset of one line (e.g. a segment of length N from the left or top) can be set as an ROI. For example, for a length of 4, an upper segment or a left segment of length 4 may be set as the ROI, for lengths of 8 and 16, the upper segment or the left segment of length 8 may be set as the ROI, for a length equal to or greater than 32, an upper segment or a left segment with a length of 16 may be set as the ROI.

The method of dividing the LFNST set list can also be classified based on line length. For example, an LFNST set list may be set for each line length (LFNST_4, LFNST_8, LFNST_16, etc.), an LFNST set list may be configured by grouping based on line length. For the above example, each case where the ROI is set equal to or greater than length 4, length 8, length 16, and length 32 is set as a group, an LFNST set list may be set for each corresponding group (named as LFNST 4, LFNST_8, or LFNST_32). For each LFNST set list, the configuration of the LFNST set or the LFNST kernel may be individually set.

As another embodiment of the detachable LFNST, the LFNST may be applied only to either a horizontal direction or a vertical direction. When a primary transform (transformation that is not a transform skip, e.g. sine transform, cosine transform, KLT) is applied to one of the horizontal and vertical directions, LFNST can be applied only for that direction

## Example 7: Method of applying LFNST to inter prediction

According to an example, LFNST may be applied after primary transform is applied to residual data generated by inter prediction as well as intra prediction mode.

When the inter prediction mode is applied, the same LFNST set list or LFNST set may be applied regardless of the applied inter prediction mode, it is also possible that different LFNST set lists, different LFNST sets, and different LFNST kernels are applied for each applied inter prediction coding tool (e.g. VVC's CIIP, GPM, etc.).

Since one LFNST set list is composed of several LFNST sets, it is possible to determine which of the multiple LFNST sets to select according to a specific criterion in the inter prediction mode. It may be coding mode information (e.g. partition information in GPM), etc. of an inter-prediction coding tool currently applied based on the specific criterion.

In addition, according to an example, since motion vectors exist in most cases where the inter prediction mode is applied, motion vector information can be used for LFNST set selection or LFNST kernel selection. For example, an LFNST set or an LFNST kernel may be selected according to the signs of the x and y components of the motion vector. More specifically, if the signs of both the x and y components are +, the first "LFNST set and LFNST kernel" is selected, if the sign of the x component is + and the sign of the y component is -, then the second "LFNST set and LFNST kernel" can be selected.

If the LFNST set is composed of several LFNST kernels, the LFNST set may be selected by applying the above specific criterion. And, by signaling the LFNST index as applied to the intra prediction mode, it may specify which LFNST kernel among the LFNST kernels constituting the selected LFNST set is applied.

According to an example, in the case of the inter prediction mode, a different ROI from the intra prediction mode may be set. In the case of inter prediction mode, when a primary transform is applied, a non-zero transform coefficient generally occurs less than that of intra prediction mode. For the inter-prediction mode, the ROI can be made smaller than that of the intra-prediction mode. For example, it could always set the ROI to the top left 4x4 region, regardless of block shape and size.

According to an example, the LFNST applied to the inter-prediction mode is also grouped based on the block shape and size as in the intra-prediction mode, the LFNST set list can be configured differently for each group. For example, LFNST_4x4, LFNST_8x8, and LFNST_16x16 are set as the LFNST set list by grouping the LFNST in a manner similar to the intra prediction mode, for each LFNST set list, the LFNST set, the number of LFNST kernels per set, and the matrix dimension of the LFNST kernel can be set differently.

According to an example, in case of inter prediction mode based on forward LFNST, the number of LFNST output transform coefficients may be set smaller than that of the intra prediction mode. For example, for the case of LFNST_$4\times4$ for inter prediction mode, the number of output transform coefficients can be reduced by applying an 8x16 transformation matrix instead of a 16x16 transformation matrix based on the forward LFNST. The number of LFNST output transform coefficients can be set differently according to the LFNST set list (LFNST _4x4, LFNST_8x8, LFNST_16x16), the dimension of the corresponding LFNST kernel matrix may be determined according to the number of output transform coefficients and the ROI.

In addition, in the case of LFNST applied to inter prediction mode according to an example, as like the LFNST in the VVC standard, all transform coefficients (The transform coefficient is the transform coefficient obtained through only the primary transform to which LFNST is not applied.) existing outside the ROI may be zeroed out, or zeroed out may not be applied.

In the VVC standard, when inter prediction mode is applied, subblock transform (SBT) for applying transform to divided subblocks of a coding block may be applied. When SBT is applied, residual data is left only for a part (i.e. half or 1/4) of the entire residual block and the rest is considered to be zero-out. Therefore, since the primary transform can be applied only to the partition block where the residual data is left, LFNST can also be applied only to the corresponding partition block.

**Example 8: Method for changing LFNST application conditions according to block size and transform coefficient pattern**

The VVC standard restricts LFNST to be applied only when a non-zero transform coefficient exists at a non-DC position even in one transform block for transform blocks constituting one coding block (However, as an exception, if the ISP mode is applied, the above restrictions do not apply). That is, LFNST can be applied only when a non-zero transform coefficient exists at a non-DC position in at least one transform block.

According to an example, the condition may be applied differently or in a modified form according to the LFNST set list. Listing related embodiments are as follows.

1. For a 4xN/Nx4 ($N \geq 4$) transform block, as in the VVC standard, LFNST can be applied only when a non-zero transform coefficient exists at a location other than the DC location. For other transform blocks (i.e. transform blocks whose horizontal and vertical lengths are equal to or greater than 8), LFNST may be applied only when a non-zero transform coefficient exists at a location other than the ($N \geq 2$) position from the DC position to the Nth position.

More generally, LFNST can be restricted to be applied depending on whether a nonspecific region or a non-zero transform coefficient exists in a specific region. For example, the specific area may be an upper left $P \times Q$ area

(e.g. P = Q = 2) or an area other than the upper left P × Q area. Alternatively, the specific area may be an area from the DC position to the Nth position or an area after the Nth position based on the scan order, as in the above example.

2. Depending on the LFNST set list, the specific area described in No. 1 may vary, and the example presented in No. 1 can be seen as an embodiment of such a configuration.

When the LFNST set lists consist of LFNST_4×4, LFNST_8x8, and LFNST_16×16, for LFNST_4×4, the specific area presented in No. 1 can be the upper left 1x1 area or the area from the DC position to the 1st position, for LFNST_8x8, the specific area may be a 2x2 area at the top left or an area from the DC position to the second position. For LFNST_16x16, the specific area can be a 2x2 area or an area from the DC position to the third position.

3. The specific area presented in No. 1 can be an area with an arbitrary shape or an area composed of a set of specific locations. For example, based on the scan order, the corresponding set may consist of first, third, and fifth scan order positions.

Alternatively, according to an example, the LFNST kernel may be selected according to a function value (y = f(x)) derived according to the variable x. It can set a vector indicating whether a value other than 0 exists for transform coefficients present at specific positions (e.g. present up to the 8th according to the scan order) or a vector of transform coefficients (or an absolute value vector) to the variable x. After passing an arbitrary function y=f(x) with x as an input, whether or not to apply LFNST or which LFNST kernel is selected can be determined according to the value of y.

Here, f(x) may be a linear combination of elements constituting the vector x. For example, in f(x) = $w^T x$, the vector w may be a vector of weights for a linear combination or an affine function (i.e., a form in which a bias is added to a linear combination).

Depending on the value of y, whether or not to apply LFNST can be determined. For example, if the value of y is less than some threshold value, LFNST is not applied (applied), when greater than the corresponding threshold value, LFNST may be set to be applied (not applied). Also, it may be set that one of the candidate LFNST kernels is selected according to whether it is small or large compared to the threshold.

**Example 9: LFNST application method according to color component**

In the VVC standard, when the tree type of a coding unit is a single tree, LFNST is applied only to the luma component, in the case of a separate tree, that is, a dual tree, LFNST is applied to the luma component in the case of a separate tree (dual tree luma) for the luma component, in the case of a separate tree (dual tree chroma) for chroma components, LFNST is applied to the chroma components.

Unlike the VVC standard, according to an embodiment, LFNST can be applied only to the luma component. If LFNST is applied only to the luma component, in a single tree, LFNST is applied only to the luma component and not to the chroma component, as in the VVC standard, the LFNST index indicates only the LFNST kernel applied to the luma component. If LFNST is applied only to the luma component, since LFNST does not apply when it is a split tree for chroma components, the LFNST index is also not signaled (If the LFNST index is not signaled, it may be assumed that the LFNST is not applied by default).

Alternatively, according to another embodiment, LFNST may be applied to both the luma component and the chroma component in the case of a single tree, unlike in the VVC standard. In this case, it can be implemented in two ways. That is, 1) image information is configured so that a corresponding LFNST kernel can be selected for both luma and chroma components by signaling one LFNST index, 2) image information may be configured such that individual LFNST indices are signaled for the luma component and the chroma component, so that the most appropriate LFNST kernel for each component may be selected.

When image information is configured such that the LFNST index is signaled individually for a luma component and a chroma component when a single tree is used, LFNST set lists, LFNST sets, and LFNST kernels for luma and chroma components can be configured differently.

In the case of a single tree, the LFNST set list, LFNST set, and LFNST kernel for luma and chroma components are set differently, when an LFNST kernel is selected for a luma component and a chroma component by signaling one LFNST index, the LFNST kernels for the luma component and the chroma component designated by one signaled LFNST index may be different because they are selected from different LFNST set lists and LFNST sets.

Meanwhile, in the VVC standard, the same LFNST set list is applied to luma and chroma components.

According to an embodiment, different LFNST set lists, different LFNST sets, and different LFNST kernels may be applied to the luma component and chroma component, unlike in the VVC standard. Alternatively, according to an embodiment, another LFNST set list, another LFNST set, or another LFNST kernel may be applied to all color components. For example, different LFNST set lists may be applied to Y, Cb, and Cr. Also, when other color formats are applied (e.g. YUV 4:2:2, YUV 4:4:4, RGB 4:4:4), different LFNST set lists, different LFNST sets, and different LFNST kernels may be applied to corresponding color formats. As a more specific example, in the case of an RGB 4:4:4 format, different LFNST set lists, different LFNST sets, and different LFNST kernels may be applied to R, G, and B components, respectively. Of course, the same LFNST set list, LFNST set, and LFNST kernel can be applied to the three components.

The following drawings are made to explain a specific example of the present specification. Since the names of specific devices or names of specific signals/messages/fields described in the drawings are provided as examples, the technical features of the present specification are not limited to the specific names used in the drawings below.

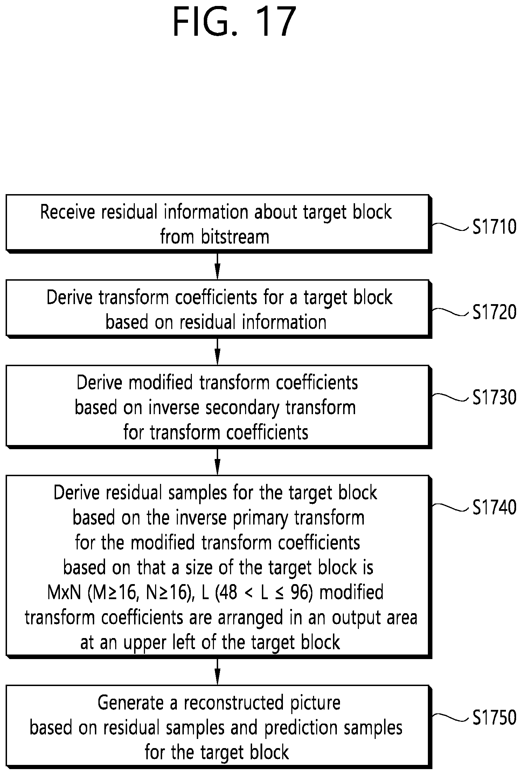

FIG. 17 is a flowchart illustrating an operation of a video decoding apparatus according to an embodiment of the present document.

Each step disclosed in FIG. 17 is based on some of the contents described above in FIGS. 5 to 16 . Therefore, detailed descriptions of overlapping details with those described above in FIGS. 3, 5 to 16 will be omitted or simplified.

The decoding apparatus 300 according to an embodiment may receive residual information about a target block from a bitstream (S 1710). The target block may be a coding block or a transform block to be coded or transformed.

The decoding device may obtain information on quantized transform coefficients from the residual information and may receive various information for image decoding. More specifically, the decoding apparatus 300 may decode information about quantized transform coefficients of a target block from a bitstream, it can derive quantized transform coefficients for the target block based on information on quantized transform coefficients for the target block.

Also, information on the LFNST applied to the target block may be received, and the information on the LFNST may be included in a Sequence Parameter Set (SPS) or a slice header. This information may include at least one of information about whether the LFNST applies, information on the minimum transform size to which LFNST is applied, information on the maximum transform size to which LFNST is applied and information about a transform index indicating one of the transform kernels included in the transform set.

The decoding apparatus 300 according to an embodiment may derive transform coefficients for a target block based on residual information (S 1720). The decoding device may derive transform coefficients by performing inverse quantization on the quantized transform coefficients of the target block.

The derived transform coefficients may be arranged in a reverse diagonal scan order in units of $4 \times 4$ subblocks, transform coefficients in a 4x4 subblock may also be arranged according to an inverse diagonal scan order. That is, transform coefficients on which inverse quantization is performed may be arranged according to an inverse scan order applied in a video codec such as VVC or HEVC.

The decoding apparatus 300 according to an embodiment may derive modified transform coefficients based on an inverse secondary transform for transform coefficients (S1730).

According to this document, the inverse secondary transform may include LFNST, that is, a non-separate secondary transform in which RST is reflected, inverse secondary transform can be performed based on the LFNST kernel, the LFNST kernel can be a non-square matrix with fewer columns than rows.

The step of deriving modified transform coefficients may include deriving an input array by arranging transform coefficients according to forward diagonal scanning order, deriving more modified transform coefficients than input transform coefficients through matrix operation of an input array and a transform kernel, and arranging modified transform coefficients in the output area

According to this document, unlike the existing VVC standard, LFNST can be applied to the upper left 16x16 region of a transform block larger than 16x16. For example, LFNST may be applied to a region of 96 samples composed of 6 4x4 sub-blocks in the upper left 16x16. That is, based on some transform coefficients belonging to the upper left 16x16 area of the target block, that is, the input array, more modified transform coefficients than transform coefficients can be derived. According to an example, the decoding device may derive L ($48<L\leq96$) modified transform coefficients based on R transform coefficients of the upper left region of the target block, L derived modified transform coefficients ($48<L\leq96$) may be arranged in a predetermined output area. R is smaller than L.

The number R of input transform coefficients constituting the input array and the number L of output transform coefficients arranged in the output region may change according to the dimension of the transform kernel. According to one example, R can be 16, 32, 48, 80, etc., and L can be 64 or 96.

According to one example, the input array is arranged in units of 4x4 sub-blocks that may be arranged in forward diagonal scanning order from the DC position of the target block, it can be sorted according to the forward diagonal scanning order within the 4x4 sub-block. Therefore, R, the number of transform coefficients constituting the input array, may be set to a multiple of 16, which is the number of transform coefficients in the 4x4 subblock.

Since the output area means the area of the input transform coefficient input to perform the secondary transform in the encoding device, if the decoding device performs inverse secondary transform, it may mean an area where output transform coefficients are arranged. The output area may correspond to the ROI described with reference to the above-described drawings.

According to one example, the output area may be composed of a plurality of 4x4 sub-blocks that may be arranged according to a scanning order from the DC position of the target block as shown in FIGS. 8 to 10. Also, the output area may be composed of a plurality of pxq sub-blocks that may be arranged in a predetermined order from the DC position of the target block. Alternatively, the output area may be an upper left m$\times$n block (m $\leq$ M, n $\leq$ N) of the target block, or may have a non-square shape as shown in FIG. 11 .

Or according to another example, the output area may have a more complex and irregular shape rather than a rectangular shape, for example, it may include a fan-shaped area composed of lines spaced apart at the same distance from the DC position of the target block. Since the transform coefficient is highly likely to be concentrated around the DC position, the output region may be set as a set of transform coefficients spaced apart from the DC position by a certain distance.

The modified transform coefficients may be arranged in the output region in either a row-first direction or a column-first direction according to the intra prediction mode of the target block. The intra prediction mode that can be applied to the target block is one of 65 directional modes, the intra prediction mode is symmetric about the intra prediction mode No. 34 in the upper left diagonal direction, if the intra-prediction mode applied to the target block is the second to the 34th mode in the left direction based on the intra-prediction mode 34, the modified transform coefficients may be 2-dimensionally arranged in the output region according to a row-major order. If the intra prediction mode applied to the target block is the 35th to the 66th mode in the right direction based on the 34th intra prediction mode, the modified transform coefficients may be arranged in a two-dimensional manner according to a column-first direction. In addition, if the intra prediction mode applied to the target block is the planner mode or the DC mode, the modified transform coefficients may be 2-dimensionally arranged in the output region according to a row-major order.

Meanwhile, deriving a modified transform coefficient may include deriving a transformation kernel for transformation, a transform kernel may be derived based on a transform set derived based on an intra prediction mode applied to a target block.

As shown in Table 2, a plurality of transform sets exist based on the mapping relationship with the intra prediction mode, one transform set may consist of a plurality of transform kernels. Which of the transform kernels constituting the transform set to apply to the LFNST can be indicated from the transform index.

On the other hand, the size of the inverse secondary transform can be set based on the size of the target block, at least one of the number of transform sets, the number of transform kernels constituting the transform set, and the dimension of the transform kernel may be derived based on the size of the inverse secondary transform.

Based on the fact that both the horizontal and vertical lengths of the target block are greater than or equal to 4 and the horizontal or vertical length is 4, the size of the inverse secondary transform may be set to a first value. For example, the first value may be set to 2. When the size of the inverse secondary transform is 2, LFNST is applied to the upper left 4x4 region of the target block, and may correspond to the aforementioned LFNST_4×4.

Alternatively, the size of the inverse secondary transform may be set to a second value based on the fact that both the horizontal and vertical lengths of the target block are greater than or equal to 8 and the horizontal and vertical lengths are 8. For example, the second value may be set to 3. When the size of the inverse secondary transform is 3, LFNST is applied to the upper left 8x8 region of the target block, and may correspond to the aforementioned LFNST_8×8.

Alternatively, the size of the inverse secondary transform may be set to a third value based on the fact that both the horizontal and vertical lengths of the target block are greater than or equal to 16. For example, the third value may be set to 4. When the size of the inverse secondary transform is 4, LFNST is applied to the upper left 16x16 region of the target block, and may correspond to the aforementioned LFNST_16×16.

Based on grouping according to the size of the inverse secondary transform, that is, the size to which LFNST is applied, at least one of the number of transform sets applied to the target block, the number of transform kernels constituting the transform set, and the dimension of the transform kernel may be derived. In other words, the number of transform sets, the number of transform kernels constituting the transform set, and the dimensions of the transform kernels can be set and configured in various ways according to the size of the inverse secondary transform or the size of the target block.

For example, based on the fact that the size of the inverse secondary transform is 2, the dimension of the transform kernel may be set to 16x16. In addition, based on the fact that the size of the inverse secondary transform is 3, the dimension of the transformation kernel can be set to 48xR or 64xS, in this case, R may be set to one of 16, 32, and 48, and S may be set to one of 16, 32, 48, and 64. In addition, based on the fact that the size of the inverse secondary transform is 4, the dimension of the transformation kernel is set to one of 96xR, 64xS or 48xT, R is any one of 16, 32, 48, 64, 80, 96, S is any one of 16, 32, 48, and 64, and T can be set to any one of 16, 32, and 48.

Meanwhile, according to an example, under the condition that LFNST is performed only when a transform coefficient exists in an area (specific area) other than the DC location, the specific area may be set differently from the existing VVC standard. The specific area can be set to various areas according to the size of the inverse secondary transform or the size of the target block.

Meanwhile, according to an example, on the basis that the tree type of the target block is a single tree, inverse secondary transform, i.e., LFNST, may be performed on the luma component and chroma component of the target block. Alternatively, according to another example, when the tree type of the target block is a dual tree, LFNST may not be performed on the chroma block.

Referring to S1730, it can be confirmed that residual samples for the target block are derived based on the LFNST for transform coefficients for the target block. Considering the size of the inverse transformation matrix, since the size of the normal inverse transform matrix is NxN, but the size of the LFNST kernel is reduced to NxR, compared to performing normal conversion, memory usage can be reduced by the R/N ratio when performing LFNST. In addition, compared to the number of multiplication operations NxN when using a normal inverse transformation matrix, by using the LFNST kernel, the number of multiplication operations can be reduced (NxR) with an R/N ratio. In addition, since only R transform coefficients need to be decoded when LFNST is applied, compared to having to decode N transform coefficients when a normal inverse transform is applied, since the total number of transform coefficients for the target block is reduced from N to R, coding efficiency may be increased. In summary, according to S1730, (inverse) transform efficiency and coding efficiency of the decoding device 300 may be increased through LFNST.

The decoding apparatus 300 according to an embodiment may derive residual samples for a target block based on an inverse primary transform for modified transform coefficients (S1740).

The decoding device 300 may perform inverse primary transform on the modified transform coefficients of the target block, in this case, a simplified inverse transform may be applied to the inverse primary transform, or a normal separation transform may be used.

According to an embodiment, LFNST may also be applied to a target block to which DST-7, DCT-8, or Karhunen Loeve Transform (KLT) is applied as an inverse primary transform.

Alternatively, according to an example, LFNST may also be applied to a target block to which transform skip is applied to horizontal transformation or vertical transformation.

Depending on the transformation kernel (DCT-2, DST-7, DCT-8, etc.) or combination of transformation kernels applied to the inverse primary transform, it is possible to design various combinations of the number of transformation sets, the number of transformation kernels constituting the transformation set, and the dimensions of the transformation kernels.

The decoding apparatus 300 according to an embodiment may generate a reconstructed picture based on residual samples of the target block and prediction samples of the target block (S1750).

According to an example of this document, LFNST may be applied not only to intra prediction but also to a target block from which prediction samples are derived based on inter prediction. Transform sets, transform kernels, and the like may be designed in various ways according to motion information and characteristics of motion vectors.

The following drawings are made to explain a specific example of the present specification. Since the names of specific devices or names of specific signals/messages/fields described in the drawings are provided as examples, the technical features of the present specification are not limited to the specific names used in the drawings below.

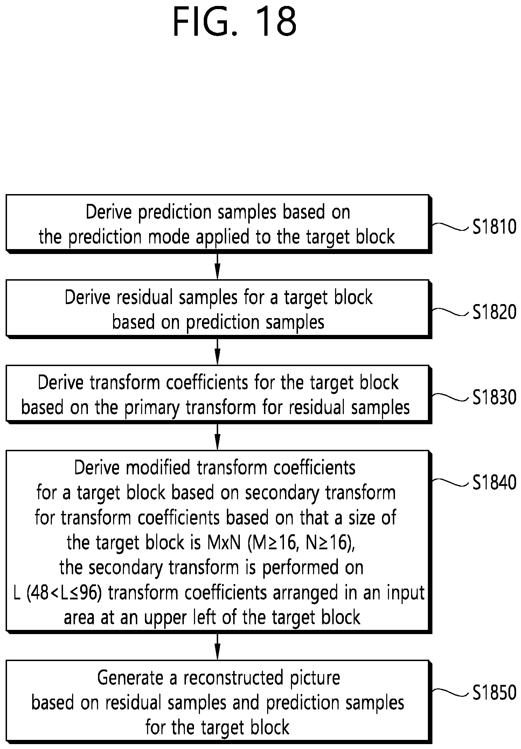

FIG. 18 is a flowchart illustrating an operation of a video encoding apparatus according to an embodiment of the present document.

Each step disclosed in FIG. 18 is based on some of the contents described above in FIGS. 5 to 16. Therefore, descriptions of details overlapping with those described above in FIGS. 2 and 5 to 16 will be omitted or simplified.

The encoding apparatus 200 according to an embodiment may derive prediction samples based on a prediction mode applied to the target block (S1810).

According to an example of this document, LFNST may be applied not only to intra prediction but also to a target block from which prediction samples are derived based on inter prediction. Depending on the characteristics of motion information and motion vectors, transform sets and transform kernels, which will be described later, can be designed in various ways.

The encoding apparatus 200 according to an embodiment may derive residual samples for a target block based on prediction samples (S1820).

The encoding apparatus 200 according to an embodiment may derive transform coefficients for the target block based on a primary transform for residual samples (S1830).

The primary transform may be performed through a plurality of transform kernels, and in this case, a transform kernel may be selected based on an intra prediction mode.

A simplified inverse transform may be applied to the primary transform, or a normal separation transform may be used.

DCT-2, DST-7, DCT-8 or KLT (Karhunen Loeve Transform) may be applied as the primary transform, according to an embodiment of the present document, LFNST may also be applied to a target block to which DST-7, DCT-8, or KLT, etc., rather than DCT-2, is applied as a primary transform.

Alternatively, according to an example, LFNST may also be applied to a target block to which transform skip is applied to horizontal transformation or vertical transformation.

Depending on the transformation kernel (DCT-2, DST-7, DCT-8, etc.) applied to the primary transform or a combination of transformation kernels, various combination designs are possible for the number of transformation sets applied to the LFNST, the number of transformation kernels constituting the transformation set, and the dimensions of the transformation kernels.

The encoding apparatus 200 according to an embodiment may derive modified transform coefficients for the target block based on the secondary transform for the transform coefficient (S 1840).

According to this document, the secondary transform may include LFNST, that is, a non-separate secondary transform in which RST is reflected, secondary transform can be performed based on the LFNST kernel, the LFNST kernel can be a non-square matrix with fewer rows than columns.

According to this document, unlike the existing VVC standard, LFNST can be applied to the upper left 16x16 region of a transform block larger than 16x16. For example, LFNST may be applied to a region of 96 samples composed of 6 4x4 sub-blocks in the upper left 16x16. That is, based on some transform coefficients belonging to the upper left 16x16 area of the target block, modified transform coefficients smaller than the transform coefficients can be derived. According to an example, based on the fact that the size of the target block is MxN (M≥16, N≥16), the encoding device may derive R modified transform coefficients based on L (48<L≤96) transform coefficients of the upper left region of the target block. The derived R modified transform coefficients may be derived as an output array according to a predetermined scanning order. R is smaller than L.

The input region, which means the region of the input transform coefficient to be subjected to secondary transform in the encoding device, may correspond to the output region described in the decoding method and the ROI described with reference to the above-mentioned drawings. Therefore, redundant description of the ROI is omitted.

The number L of input transform coefficients arranged in the input region and the number R of modified transform coefficients derived through matrix operation may change according to the dimension of the transform kernel. According to one example, R can be 16, 32, 48, 80, etc., and L can be 64 or 96.

According to an example, the modified transform coefficients are arranged in units of 4x4 subblocks that may be arranged in forward diagonal scanning order from the DC position of the target block, it can be sorted according to the forward diagonal scanning order within the 4x4 sub-block. Therefore, R, the number of modified transform coefficients, may be set as a multiple of 16, which is the number of transform coefficients in a 4x4 subblock.

Deriving a modified transform coefficient may include deriving a transform kernel for transformation, a transform kernel may be derived based on a transform set derived based on an intra prediction mode applied to a target block.

As shown in Table 2, a plurality of transform sets exist based on the mapping relationship with the intra prediction mode, one transform set may consist of a plurality of transform kernels. Which of the transform kernels constituting the transform set to apply to the LFNST can be encoded as a transform index.

Meanwhile, the size of the secondary transform can be set based on the size of the target block, at least one of the number of transform sets, the number of transform kernels constituting the transform set, and the dimension of the transform kernel may be derived based on the size of the secondary transform.

Based on the fact that both the horizontal and vertical lengths of the target block are greater than or equal to 4 and the horizontal or vertical length is 4, the size of the secondary transform may be set to a first value. For example, the first value may be set to 2. The size of the secondary transform is 2, LFNST is applied to the upper left 4x4 region of the target block, and may correspond to the aforementioned LFNST_4×4.

Alternatively, the size of the secondary transform may be set to a second value based on the fact that both the horizontal and vertical lengths of the target block are greater than or equal to 8 and the horizontal and vertical lengths are 8. For example, the second value may be set to 3. The size of the secondary transform of 3 means that the LFNST is applied to the 8x8 region at the top left of the target block, and may correspond to the aforementioned LFNST_8×8.

Alternatively, the size of the secondary transform may be set to a third value based on the fact that both the horizontal and vertical lengths of the target block are greater than or equal to 16. For example, the third value may be set to 4. When the size of the secondary transform is 4, LFNST is applied to the upper left 16x16 region of the target block, which may correspond to the aforementioned LFNST_16x16.

Based on grouping according to the size of the secondary transform, that is, the size to which LFNST is applied, at least one of the number of transform sets applied to the target block, the number of transform kernels constituting the transform set, and the dimension of the transform kernel may be derived. In other words, the number of transform sets, the number of transform kernels constituting the transform set, and the dimension of transform kernels may be set and configured in various ways according to the size of the secondary transform or the size of the target block.

For example, based on the fact that the size of the secondary transform is 2, the dimension of the transform kernel may be set to 16x16. In addition, based on the size of the secondary transform being 3, the dimension of the transformation kernel can be set to Rx48 or Sx64, in this case, R may be set to one of 16, 32, and 48, and S may be set to one of 16, 32, 48, and 64. In addition, based on the size of the secondary transform being 4, the dimension of the transformation kernel is set to one of Rx96, Sx64 or Tx48, R is any one of 16, 32, 48, 64, 80, 96, S is any one of 16, 32, 48, and 64, and T can be set to any one of 16, 32, and 48.

Meanwhile, according to an example, under the condition that LFNST is performed only when a transform coefficient exists in an area (specific area) other than the DC location, the specific area may be set differently from the existing VVC standard. The specific area can be set to various areas according to the size of the inverse secondary transform or the size of the target block.

Meanwhile, according to an example, secondary transform, i.e., LFNST, may be performed on the luma component and the chroma component of the target block based on a tree type of the target block being a single tree. Alternatively, according to another example, when the tree type of the target block is a dual tree, LFNST may not be performed on the chroma block.

Referring to S 1840, it can be seen that transform coefficients for the target block are derived based on the LFNST for the residual samples. Considering the size of the transformation kernel matrix, since the size of the normal transformation kernel matrix is NxN, and the size of the LFNST kernel is reduced to RxN, compared to performing normal conversion, memory usage can be reduced by the R/N ratio when performing LFNST. In addition, compared to the number of multiplication operations NxN when using a normal transformation kernel matrix, by using the LFNST kernel, the number of multiplication operations can be reduced (RxN) with an R/N ratio. In addition, since only R transform coefficients are derived when LFNST is applied, compared to N transform coefficients derived when a normal transform is applied, since the total number of transform coefficients for the target block is reduced from N to R, the amount of data transmitted from the encoding device 200 to the decoding device 300 may be reduced. In summary, according to S 1840, conversion efficiency and coding efficiency of the encoding device 200 may be increased through RST.

The encoding apparatus 200 according to an embodiment may encode image information including residual information about a target block (S 1850).

The encoding device derives quantized transform coefficients by performing quantization based on modified transform coefficients, residual information about quantized transform coefficients may be generated and encoded. The residual information may include the above-described transformation related information/syntax element. The encoding device may encode image/video information including residual information and output the encoded image/video information in the form of a bitstream.

In addition, the encoding device may also encode information about the LFNST applied to the target block, information on the LFNST may be included in a Sequence Parameter Set (SPS) or a slice header. This information may include at least one of information about whether the LFNST applies, information on the minimum transform size to which LFNST is applied, information on the maximum transform size to which LFNST is applied and information about a transform index indicating one of the transform kernels included in the transform set.

In the present disclosure, at least one of quantization/dequantization and/or transform/inverse transform may be omitted. When quantization/dequantization is omitted, a quantized transform coefficient may be referred to as a transform coefficient. When transform/inverse transform is omitted, the transform coefficient may be referred to as a coefficient or a residual sample, or may still be referred to as a transform coefficient for consistency of expression.

In addition, in the present disclosure, a quantized transform coefficient and a transform coefficient may be referred to as a transform coefficient and a scaled transform coefficient, respectively. In this case, residual information may include information on a transform coefficient(s), and the information on the transform coefficient(s) may be signaled through a residual coding syntax. Transform coefficients may be derived based on the residual information (or information on the transform coefficient(s)), and scaled transform coefficients may be derived through inverse transform (scaling) of the transform coefficients. Residual samples may be derived based on the inverse transform (transform) of the scaled transform coefficients. These details may also be applied/expressed in other parts of the present disclosure.

In the above-described embodiments, the methods are explained on the basis of flowcharts by means of a series of steps or blocks, but the present disclosure is not limited to the order of steps, and a certain step may be performed in order or step different from that described above, or concurrently with another step. Further, it may be understood by a person having ordinary skill in the art that the steps shown in a flowchart are not exclusive, and that another step may be incorporated or one or more steps of the flowchart may be removed without affecting the scope of the present disclosure.

The above-described methods according to the present disclosure may be implemented as a software form, and an encoding apparatus and/or decoding apparatus according to the disclosure may be included in a device for image processing, such as, a TV, a computer, a smartphone, a set-top box, a display device or the like.

When embodiments in the present disclosure are embodied by software, the above-described methods may be embodied as modules (processes, functions or the like) to perform the above-described functions. The modules may be stored in a memory and may be executed by a processor. The memory may be inside or outside the processor and may be connected to the processor in various well-known manners. The processor may include an application-specific integrated circuit (ASIC), other chipset, logic circuit, and/or a data processing device. The memory may include a read-only memory (ROM), a random access memory (RAM), a flash memory, a memory card, a storage medium, and/or other storage device. That is, embodiments described in the present disclosure may be embodied and performed on a processor, a microprocessor, a controller or a chip. For example, function units shown in each drawing may be embodied and performed on a computer, a processor, a microprocessor, a controller or a chip.

Further, the decoding apparatus and the encoding apparatus to which the present disclosure is applied, may be included in a multimedia broadcasting transceiver, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an over the top (OTT) video device, an Internet streaming service providing device, a three-dimensional (3D) video device, a video telephony video device, and a medical video device, and may be used to process a video signal or a data signal. For example, the over the top (OTT) video device may include a game console, a Blu-ray player, an Internet access TV, a Home theater system, a smartphone, a Tablet PC, a digital video recorder (DVR) and the like.

In addition, the processing method to which the present disclosure is applied, may be produced in the form of a program executed by a computer, and be stored in a computer-readable recording medium. Multimedia data having a data structure according to the present disclosure may also be stored in a computer-readable recording medium. The computer-readable recording medium includes all kinds of storage devices and distributed storage devices in which computer-readable data are stored. The computer-readable recording medium may include, for example, a Blu-ray Disc (BD), a universal serial bus (USB), a ROM, a PROM, an EPROM, an EEPROM, a RAM, a CD-ROM, a magnetic tape, a floppy disk, and an optical data storage device. Further, the computer-readable recording medium includes media embodied in the form of a carrier wave (for example, transmission over the Internet). In addition, a bitstream generated by the encoding method may be stored in a computer-readable recording medium or transmitted through a wired or wireless communication network. Additionally, the embodiments of the present disclosure may be embodied as a computer program product by program codes, and the program codes may be executed on a computer by the embodiments of the present disclosure. The program codes may be stored on a computer-readable carrier.

Claims disclosed herein can be combined in a various way. For example, technical features of method claims of the present disclosure can be combined to be implemented or performed in an apparatus, and technical features of apparatus claims can be combined to be implemented or performed in a method. Further, technical features of method claims and apparatus claims can be combined to be implemented or performed in an apparatus, and technical features of method claims and apparatus claims can be combined to be implemented or performed in a method.

**Claims**

1. A method for image decoding, the method performed by a decoding apparatus and comprising:

    receiving residual information for a target block from a bitstream;
    deriving transform coefficients for the target block based on the residual information;
    deriving modified transform coefficients based on inverse secondary transform for the transform coefficients;
    deriving residual samples for the target block based on inverse primary transform for the modified transform coefficients; and
    generating a reconstructed picture based on the residual samples of the target block, wherein, based on that a size of the target block is MxN (M≥16, N≥16), L (48 < L ≤ 96) modified transform coefficients are arranged in an output area at an upper left of the target block.

2. The method of claim 1, wherein the deriving the modified transform coefficients comprises:

    deriving an input array by sorting the transform coefficients according to a forward diagonal scanning order;
    deriving a larger number of modified transform coefficients than the transform coefficients through a matrix operation of the input array and a transform kernel;
    arranging the modified transform coefficients in the output area;
    wherein the modified transform coefficients are arranged in the output area based on an order of either row-first direction or column-first direction according to an intra prediction mode of the target block.

3. The method of claim 2, wherein the output area is composed of a plurality of 4x4 sub-blocks which can be arranged in a scanning order from the DC position of the target block.

4. The method of claim 2, wherein the output area is composed of a plurality of pxq sub-blocks which can be arranged in a predetermined order from the DC position of the target block.

5. The method of claim 2, wherein the output area is an mxn block (m ≤ M, n ≤ N) at a top left of the target block.

6. The method of claim 2, wherein the output area comprises a fan-shaped area composed of lines spaced apart from the DC position of the target block by a same distance.

7. The method of claim 2, wherein the input array includes R transform coefficients, wherein R is a multiple of 16 smaller than L.

8. The method of claim 2, wherein the input array is sorted in units of 4x4 sub-blocks which can be arranged in the forward diagonal scanning order from the DC position of the target block and sorted according to the forward diagonal scanning order within the 4x4 sub-block.

9. The method of claim 2, wherein the deriving the modified transform coefficients comprises deriving the transform kernel to be applied to the secondary transform,

wherein the transform kernel is derived based on a transform set derived based on an intra prediction mode applied to the target block,
wherein the transform set exists in plural based on a mapping relationship with the intra prediction mode, and one transform set is composed of a plurality of transform kernels,
wherein a size of the inverse secondary transform is set based on the size of the target block,
wherein at least one of a number of transform sets, a number of transform kernels constituting the transform set and a dimension of a transform kernel is derived based on the size of the inverse secondary transform.

10. The method of claim 9, wherein, based on that both a horizontal length and a vertical length of the target block are greater than or equal to 4, and a horizontal length or a vertical length is 4, the size of the inverse secondary transform is set to a first value,

wherein, based on that both a horizontal length and a vertical length of the target block are greater than or equal to 8, and a horizontal length or a vertical length is 8, the size of the inverse secondary transform is set to a second value,
wherein, based on that both a horizontal length and a vertical length of the target block are greater than or equal to 16, the size of the inverse secondary transform is set to a third value.

11. The method of claim 10, wherein, based on the size of the inverse secondary transform being the first value, the dimension of the transform kernel is set to 16x16,

wherein, based on the size of the inverse secondary transform being the second value, the dimension of the transformation kernel is set to 48xR or 64xS, where the R is any one of 16, 32, 48, the S is any one of 16, 32, 48, 64,
wherein, based on the size of the inverse secondary transform being the third value, the dimension of the transformation kernel is set to any one of 96xR, 64xS or 48xT, where the R is any one of 16, 32, 48, 64, 80, 96, the S is any one of 16, 32, 48, 64, the T is any one of 16, 32, 48.

12. The method of claim 1, wherein any one of DST-7, DCT-8 or Karhunen Loeve Transform (KLT) is applied to the inverse primary transform.

13. The method of claim 12, wherein the deriving the modified transform coefficients comprises deriving a transform kernel to be applied to the secondary transform,

wherein the transform kernel is derived based on a transform set derived based on an intra prediction mode applied to the target block,
wherein the transform set exists in plural based on a mapping relationship with the intra prediction mode, and one transform set is composed of a plurality of transform kernels;
wherein a size of the inverse secondary transform is set based on the size of the target block,
wherein at least one of a number of transform sets, a number of transform kernels constituting the transform set and a dimension of a transform kernel is derived based on the size of the inverse secondary transform and a transform kernel applied to the inverse primary transform.

14. The method of claim 1, wherein the inverse primary transform includes a horizontal transform and a vertical transform, and
wherein a transform skip is applied to the horizontal transform or the vertical transform.

15. The method of claim 1, wherein the method further comprises deriving prediction samples for the target block based on an inter prediction.

16. The method of claim 9, wherein the method further comprises receiving information for a transform index applied to the inverse secondary transform,

wherein the transform index is received when a transform coefficient exists in a specific area of the target block, and

wherein the specific area is set based on the size of the inverse secondary transform

17. The method of claim 1, wherein, based on a tree type of the target block being a single tree, the inverse secondary transform is performed on luma component and chroma component of the target block.

18. A method for image encoding, the method performed by an encoding apparatus and comprising:

    deriving prediction samples for a target block;
    deriving residual samples for the target block based on the prediction samples;
    deriving transform coefficients for the target block based on a primary transform for the residual samples;
    deriving modified transform coefficients based on a secondary transform of the transform coefficients; and
    encoding image information including residual information derived based on the modified transform coefficients,
    wherein, based on that a size of the target block is MxN ($M \geq 16$, $N \geq 16$), the secondary transform is performed on L ($48 < L \leq 96$) transform coefficients arranged in an input area at an upper left of the target block.

19. A computer-readable digital storage medium, wherein a bitstream generated according to a predetermined method is stored in the computer-readable digital storage medium, the method comprising:

    deriving prediction samples for a target block;
    deriving residual samples for the target block based on the prediction samples;
    deriving transform coefficients for the target block based on a primary transform for the residual samples;
    deriving modified transform coefficients based on a secondary transform of the transform coefficients; and
    encoding image information including residual information derived based on the modified transform coefficients to generate the bitstream,
    wherein, based on that a size of the target block is MxN ($M \geq 16$, $N \geq 16$), the secondary transform is performed on L ($48 < L < 96$) transform coefficients arranged in an input area at an upper left of the target block.

# FIG. 1

# FIG. 2

# FIG. 3

EP 4 300 966 A1

BITSTREAM

DECODING APPARATUS 300

ENTROPY DECODER 310

DEQUANTIZER 321

INVERSE TRANSFORMER 322

320

340

FILTER 350

RECONSTRUCTED IMAGE (PICTURE)

INTRA PREDICTOR 331

MEMORY

INTER PREDICTOR 332

DPB

330

360

# FIG. 4

EP 4 300 966 A1

# FIG. 5

# FIG. 6

# FIG. 7

Reduced
Transform

Residual ⟶ T x [ ] ⟶ Coefficient

(a)

Reduced Inv.
Transform

Coefficient ⟶ $T^t$x [ ] ⟶ Residual

(b)

# FIG. 8

(a)

(b)

# FIG. 9a

| 1 | 2 | 3 | 4 | 5 | 6 | 7 | 8 | | | | | | | | |
|---|---|---|---|---|---|---|---|---|---|---|---|---|---|---|---|
| 9 | 10 | 11 | 12 | 13 | 14 | 15 | 16 | | | | | | | | |
| 17 | 18 | 19 | 20 | 21 | 22 | 23 | 24 | | | | | | | | |
| 25 | 26 | 27 | 28 | 29 | 30 | 31 | 32 | | | | | | | | |
| 33 | 34 | 35 | 36 | | | | | | | | | | | | |
| 37 | 38 | 39 | 40 | | | | | | | | | | | | |
| 41 | 42 | 43 | 44 | | | | | | | | | | | | |
| 45 | 46 | 47 | 48 | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |

# FIG. 9b

| 1 | 2 | 3 | 4 | 5 | 6 | 7 | 8 | 9 | 10 | 11 | 12 | | | | |
|---|---|---|---|---|---|---|---|---|---|---|---|---|---|---|---|
| 13 | 14 | 15 | 16 | 17 | 18 | 19 | 20 | 21 | 22 | 23 | 24 | | | | |
| 25 | 26 | 27 | 28 | 29 | 30 | 31 | 32 | 33 | 34 | 35 | 36 | | | | |
| 37 | 38 | 39 | 40 | 41 | 42 | 43 | 44 | 45 | 46 | 47 | 48 | | | | |
| 49 | 50 | 51 | 52 | 53 | 54 | 55 | 56 | | | | | | | | |
| 57 | 58 | 59 | 60 | 61 | 62 | 63 | 64 | | | | | | | | |
| 65 | 66 | 67 | 68 | 69 | 70 | 71 | 72 | | | | | | | | |
| 73 | 74 | 75 | 76 | 77 | 78 | 79 | 80 | | | | | | | | |
| 81 | 82 | 83 | 84 | | | | | | | | | | | | |
| 85 | 86 | 87 | 88 | | | | | | | | | | | | |
| 89 | 90 | 91 | 92 | | | | | | | | | | | | |
| 93 | 94 | 95 | 96 | | | | | | | | | | | | |
| | | | | | | | | | | | | | | | |
| | | | | | | | | | | | | | | | |
| | | | | | | | | | | | | | | | |
| | | | | | | | | | | | | | | | |

# FIG. 10a

| 1 | 9 | 17 | 25 | 33 | 37 | 41 | 45 | | | | | | | | |
|---|----|----|----|----|----|----|----|---|---|---|---|---|---|---|---|
| 2 | 10 | 18 | 26 | 34 | 38 | 42 | 46 | | | | | | | | |
| 3 | 11 | 19 | 27 | 35 | 39 | 43 | 47 | | | | | | | | |
| 4 | 12 | 20 | 28 | 36 | 40 | 44 | 48 | | | | | | | | |
| 5 | 13 | 21 | 29 | | | | | | | | | | | | |
| 6 | 14 | 22 | 30 | | | | | | | | | | | | |
| 7 | 15 | 23 | 31 | | | | | | | | | | | | |
| 8 | 16 | 24 | 32 | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |

# FIG. 10b

| 1  | 13 | 25 | 37 | 49 | 57 | 68 | 73 | 81 | 85 | 89 | 93 |  |  |  |  |
|----|----|----|----|----|----|----|----|----|----|----|----|--|--|--|--|
| 2  | 14 | 26 | 38 | 50 | 58 | 66 | 74 | 82 | 86 | 90 | 94 |  |  |  |  |
| 3  | 15 | 27 | 39 | 51 | 59 | 67 | 75 | 83 | 87 | 91 | 95 |  |  |  |  |
| 4  | 16 | 28 | 40 | 52 | 60 | 68 | 76 | 84 | 88 | 92 | 96 |  |  |  |  |
| 5  | 17 | 29 | 41 | 53 | 61 | 69 | 77 |    |    |    |    |  |  |  |  |
| 6  | 18 | 30 | 42 | 54 | 62 | 70 | 78 |    |    |    |    |  |  |  |  |
| 7  | 19 | 31 | 43 | 55 | 63 | 71 | 79 |    |    |    |    |  |  |  |  |
| 8  | 20 | 32 | 44 | 56 | 64 | 72 | 80 |    |    |    |    |  |  |  |  |
| 9  | 21 | 33 | 45 |    |    |    |    |    |    |    |    |  |  |  |  |
| 10 | 22 | 34 | 46 |    |    |    |    |    |    |    |    |  |  |  |  |
| 11 | 23 | 35 | 47 |    |    |    |    |    |    |    |    |  |  |  |  |
| 12 | 24 | 36 | 48 |    |    |    |    |    |    |    |    |  |  |  |  |
|    |    |    |    |    |    |    |    |    |    |    |    |  |  |  |  |
|    |    |    |    |    |    |    |    |    |    |    |    |  |  |  |  |
|    |    |    |    |    |    |    |    |    |    |    |    |  |  |  |  |
|    |    |    |    |    |    |    |    |    |    |    |    |  |  |  |  |

# FIG. 11

(a)

(b)

# FIG. 12

(a)

(b)

# FIG. 13

(a)

(b)

(c)

# FIG. 14

(a)

(b)

(c)

(d)

# FIG. 15

# FIG. 16

| 1 | 3 | 6 | 10 | 33 | 35 | 38 | 42 | 81 | 83 | 86 | 90 | | | | |
| 2 | 5 | 9 | 13 | 34 | 37 | 41 | 45 | 82 | 85 | 89 | 93 | | | | |
| 4 | 8 | 12 | 15 | 36 | 40 | 44 | 47 | 84 | 88 | 92 | 95 | | | | |
| 7 | 11 | 14 | 16 | 39 | 43 | 46 | 48 | 87 | 91 | 94 | 96 | | | | |
| 17 | 19 | 22 | 26 | 65 | 67 | 70 | 74 | | | | | | | | |
| 19 | 21 | 25 | 29 | 66 | 69 | 73 | 77 | | | | | | | | |
| 20 | 24 | 28 | 31 | 68 | 72 | 76 | 79 | | | | | | | | |
| 23 | 27 | 30 | 32 | 71 | 75 | 78 | 80 | | | | | | | | |
| 49 | 51 | 54 | 58 | | | | | | | | | | | | |
| 50 | 53 | 57 | 61 | | | | | | | | | | | | |
| 52 | 56 | 60 | 63 | | | | | | | | | | | | |
| 55 | 59 | 62 | 64 | | | | | | | | | | | | |
| | | | | | | | | | | | | | | | |
| | | | | | | | | | | | | | | | |
| | | | | | | | | | | | | | | | |
| | | | | | | | | | | | | | | | |

# FIG. 17

Receive residual information about target block
from bitstream ⟍ S1710

Derive transform coefficients for a target block
based on residual information ⟍ S1720

Derive modified transform coefficients
based on inverse secondary transform
for transform coefficients ⟍ S1730

Derive residual samples for the target block
based on the inverse primary transform
for the modified transform coefficients
based on that a size of the target block is
MxN (M≥16, N≥16), L (48 < L ≤ 96) modified
transform coefficients are arranged in an output area
at an upper left of the target block ⟍ S1740

Generate a reconstructed picture
based on residual samples and prediction samples
for the target block ⟍ S1750

# FIG. 18

Derive prediction samples based on
the prediction mode applied to the target block — S1810

Derive residual samples for a target block
based on prediction samples — S1820

Derive transform coefficients for the target block
based on the primary transform for residual samples — S1830

Derive modified transform coefficients
for a target block based on secondary transform
for transform coefficients based on that a size of
the target block is MxN (M≥16, N≥16),
the secondary transform is performed on
L (48<L≤96) transform coefficients arranged in an input
area at an upper left of the target block — S1840

Generate a reconstructed picture
based on residual samples and prediction samples
for the target block — S1850

## INTERNATIONAL SEARCH REPORT

| | International application No. |
|---|---|
| | **PCT/KR2022/002524** |

### A. CLASSIFICATION OF SUBJECT MATTER

**H04N 19/593**(2014.01)i; **H04N 19/122**(2014.01)i; **H04N 19/129**(2014.01)i; **H04N 19/132**(2014.01)i; **H04N 19/176**(2014.01)i; **H04N 19/11**(2014.01)i; **H04N 19/61**(2014.01)i

According to International Patent Classification (IPC) or to both national classification and IPC

### B. FIELDS SEARCHED

Minimum documentation searched (classification system followed by classification symbols)

H04N 19/593(2014.01); H04N 19/105(2014.01); H04N 19/11(2014.01); H04N 19/122(2014.01); H04N 19/13(2014.01); H04N 19/132(2014.01); H04N 19/61(2014.01); H04N 19/90(2014.01); H04N 19/91(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 잔차(residual), 변환 계수(transform coefficient), 블록(block), 크기(size), 샘플(sample), 수정(correction), Low Frequency Non-Separable Transform(LFNST)

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0060397 A (LG ELECTRONICS INC.) 29 May 2020 (2020-05-29)<br>See claims 1-2. | 1-19 |
| A | KR 10-2021-0019108 A (LG ELECTRONICS INC.) 19 February 2021 (2021-02-19)<br>See claims 1 and 8. | 1-19 |
| A | KR 10-2020-0055085 A (LG ELECTRONICS INC.) 20 May 2020 (2020-05-20)<br>See claims 1-4. | 1-19 |
| A | KR 10-2021-0013758 A (LG ELECTRONICS INC.) 05 February 2021 (2021-02-05)<br>See claims 1-8. | 1-19 |
| A | KR 10-2018-0084814 A (QUALCOMM INCORPORATED) 25 July 2018 (2018-07-25)<br>See claim 1. | 1-19 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 May 2022** | **30 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="2" align="center">INTERNATIONAL SEARCH REPORT<br>Information on patent family members</td><td colspan="2">International application No.<br><br>**PCT/KR2022/002524**</td></tr>
</table>

| Patent document cited in search report | Publication date (day/month/year) | Patent family member(s) | Publication date (day/month/year) |
|---|---|---|---|
| KR 10-2020-0060397 A | 29 May 2020 | CN 111436231 A | 21 July 2020 |
| | | EP 3709658 A1 | 16 September 2020 |
| | | JP 2021-510022 A | 08 April 2021 |
| | | KR 10-2022-0025268 A | 03 March 2022 |
| | | US 10958939 B2 | 23 March 2021 |
| | | US 11218733 B2 | 04 January 2022 |
| | | US 2020-0236403 A1 | 23 July 2020 |
| | | US 2021-0136418 A1 | 06 May 2021 |
| | | WO 2020-101321 A1 | 22 May 2020 |
| KR 10-2021-0019108 A | 19 February 2021 | CN 112655216 A | 13 April 2021 |
| | | EP 3806475 A1 | 14 April 2021 |
| | | US 2021-0120252 A1 | 22 April 2021 |
| | | WO 2020-009556 A1 | 09 January 2020 |
| KR 10-2020-0055085 A | 20 May 2020 | CN 111406407 A | 10 July 2020 |
| | | EP 3691275 A1 | 05 August 2020 |
| | | EP 3975572 A1 | 30 March 2022 |
| | | JP 2021-503233 A | 04 February 2021 |
| | | KR 10-2022-0029790 A | 08 March 2022 |
| | | US 10992935 B2 | 27 April 2021 |
| | | US 2020-0260080 A1 | 13 August 2020 |
| | | US 2021-0211667 A1 | 08 July 2021 |
| | | WO 2020-055014 A1 | 19 March 2020 |
| KR 10-2021-0013758 A | 05 February 2021 | US 2021-0321134 A1 | 14 October 2021 |
| | | WO 2020-013541 A1 | 16 January 2020 |
| KR 10-2018-0084814 A | 25 July 2018 | CN 108464002 A | 28 August 2018 |
| | | EP 3381186 A1 | 03 October 2018 |
| | | EP 3381188 A1 | 03 October 2018 |
| | | JP 2019-500778 A | 10 January 2019 |
| | | JP 2019-500779 A | 10 January 2019 |
| | | KR 10-2018-0084813 A | 25 July 2018 |
| | | KR 10-2018-0084815 A | 25 July 2018 |
| | | US 2017-0150176 A1 | 25 May 2017 |
| | | US 2017-0150183 A1 | 25 May 2017 |
| | | US 2017-0150186 A1 | 25 May 2017 |

Form PCT/ISA/210 (patent family annex) (July 2019)